# EUROPEAN PATENT APPLICATION

(11) **EP 4 531 257 A1**
(43) Date of publication of application: **02.04.2025**
(21) Application number: 23838575.1
(22) Date of filing: 31.05.2023
(51) Int. Cl.: H02M 1/36

(54) **DCDC CIRCUIT, CIRCUIT START-UP METHOD, DEVICE, MEDIUM, AND PROGRAM PRODUCT**

(30) Priority: 13.07.2022 CN 202210854090
(71) Applicant: GUANGDONG OPPO MOBILE TELECOMMUNICATIONS CORP., LTD., Dongguan, Guangdong 523860 (CN)
(72) Inventor: GUO, Hongguang, Dongguan, Guangdong 523860 (CN); ZHANG, Chensong, Dongguan, Guangdong 523860 (CN); LI, Jianguo, Dongguan, Guangdong 523860 (CN); ZHANG, Jin, Dongguan, Guangdong 523860 (CN); JI, Ce, Dongguan, Guangdong 523860 (CN); TIAN, Chen, Dongguan, Guangdong 523860 (CN); ZHANG, Jialiang, Dongguan, Guangdong 523860 (CN)
(74) Representative: Novagraaf Technologies
(86) International application number: PCT/CN2023/097444
(87) International publication number: WO 2024/012081

(57) **Abstract**

The present application relates to a DCDC circuit, a circuit start-up method, a device, a medium, and program product. A control circuit controls the ON-duration of a first switching tube and a second switching tube in a first bridge circuit of a transformer circuit in each switching period to be gradually increased, and after the transformer circuit is started up, controls the ON-duration of a third switching tube and a fourth switching tube in a second bridge circuit of a synchronous rectification circuit in each switching period to be gradually increased, so that energy gradually enters the transformer circuit and the synchronous rectification circuit. Thus, the magnitudes of currents respectively entering the transformer circuit and the synchronous rectification circuit during the start-up of the transformer circuit and the start-up of the synchronous rectification circuit can be controlled, thereby effectively suppressing the current impact in the transformer circuit and the synchronous rectification circuit. Therefore, embodiments of the present application can help to ensure the safe operation of the switching tubes in the DCDC circuit, thereby facilitating the safe start-up of the DCDC circuit.

## Description

### CROSS-REFERENCE TO RELATED APPLICATIONS

The present disclosure claims priority of Chinese Patent Application No. 2022108540905, titled "DCDC CIRCUIT, CIRCUIT START-UP METHOD, DEVICE, MEDIUM, AND PROGRAM PRODUCT", filed on July 13, 2022, the contents of which are hereby incorporated by reference.

### TECHNICAL FIELD

The present disclosure relates to the field of circuit technologies, and in particular, to a DCDC circuit, a circuit start-up method, a device, a medium, and a program product.

### BACKGROUND

A Leakage Inductance, Magnetizing Inductance, and Resonant Capacitor (LLC) circuit topology and an LLC direct current transformer (DCX) circuit topology (hereinafter referred to as DCX circuit topology) are common voltage conversion topologies in a high-voltage direct current to direct current conversion (DCDC) circuit.

Typically, the LLC circuit topology and the DCX circuit topology include a half-bridge circuit (or a full-bridge circuit) and a resonant circuit, and the resonant circuit includes an independent resonant inductor, a resonant capacitor, and a leakage inductance of the transformer. In order to improve voltage conversion efficiency, the synchronous rectification circuit is typically located at an output terminal of the LLC circuit topology or the DCX circuit topology in the DCDC circuit.

Due to limitations in circuit space structure or cost, in the LLC circuit topology and the DCX circuit topology, the leakage inductance of the transformer is used as a resonant inductor in the resonant circuit, so that an independent inductor can be saved. However, since the inductance of the leakage inductance of the transformer is limited, the leakage inductance cannot have the ability to suppress a sudden change in current like the independent inductor. Therefore, during a start-up process of the DCDC circuit, there may be a problem of excessive surge current causing damage to a switch.

### SUMMARY

Based on the background above, it is necessary to provide a DCDC circuit, a circuit start-up method, a device, a medium, and a program product that can be safely started in response to the above-mentioned technical issues.

In a first aspect, the present disclosure provides a direct current to direct current conversion (DCDC) circuit, the DCDC circuit includes a transformer circuit, a synchronous rectification circuit, and a control circuit.

The control circuit is configured to control a turn-on duration of a first switch and a turn-on duration of a second switch in a first bridge circuit of the transformer circuit to increase progressively every switching cycle until an output voltage of the transformer circuit is greater than a first target voltage; wherein a first initial turn-on duration of the first switch corresponding to a first switching cycle is different from a second initial turn-on duration of the second switch corresponding to the first switching cycle.

The control circuit is configured to control a turn-on duration of a third switch and a turn-on duration of a fourth switch in a second bridge circuit of the synchronous rectification circuit to increase progressively every switching cycle until an output voltage of the synchronous rectification circuit is greater than a second target voltage, wherein a third initial turn-on duration of the third switch corresponding to the first switching cycle is different from a fourth initial turn-on duration of the fourth switch corresponding to the first switching cycle.

In a second aspect, the present disclosure also provides a circuit start-up method, which is applied to a direct current to direct current conversion (DCDC) circuit. The DCDC circuit includes a transformer circuit, a synchronous rectification circuit, and a control circuit.

The method includes: controlling, by the control circuit, a turn-on duration of a first switch and a turn-on duration of a second switch in a first bridge circuit of the transformer circuit to increase progressively every switching cycle until an output voltage of the transformer circuit is greater than a first target voltage; wherein a first initial turn-on duration of the first switch corresponding to a first switching cycle is different from a second initial turn-on duration of the second switch corresponding to the first switching cycle; and controlling, by the control circuit, a turn-on duration of a third switch and a turn-on duration of a fourth switch in a second bridge circuit of the synchronous rectification circuit to increase progressively every switching cycle until an output voltage of the synchronous rectification circuit is greater than a second target voltage, wherein a third initial turn-on duration of the third switch corresponding to the first switching cycle is different from a fourth initial turn-on duration of the fourth switch corresponding to the first switching cycle.

In a third aspect, the present disclosure also provides an electronic device, the electronic device includes the direct current to the direct current conversion (DCDC) circuit described in the first aspect above.

In a fourth aspect, the present disclosure also provides a computer-readable storage medium, storing a computer program that when executed, causes a processor to execute the computer program to perform the circuit start-up method as described in the second aspect.

In a fifth aspect, the present disclosure also provides a computer program product, including a computer program that when executed, causes a processor to execute the computer program to perform the circuit start-up method as described in the second aspect.

In the above-mentioned DCDC circuit, the circuit start-up method, the electronic device, the computer-readable storage medium, and the program product, during the start-up process of the transformer circuit, the control circuit controls the turn-on duration of the first switch and the turn-on duration of the second switch in the first bridge circuit of the transformer circuit to increase progressively every switching cycle, to make electrical energy from the voltage input terminal of the DCDC circuit progressively enter the resonant circuit of the transformer circuit, so that current entering the resonant circuit during the start-up process of the transformer circuit can be controlled, thereby effectively suppressing current surge in the resonant circuit. Furthermore, after start-up of the transformer circuit, the control circuit controls the turn-on duration of the third switch and the turn-on duration of the fourth switch in the second bridge circuit of the synchronous rectification circuit to increase progressively every switching cycle, to make electrical energy from the voltage output terminal of the transformer circuit progressively enter the synchronous rectification circuit, so that current entering the synchronous rectification circuit during the start-up process can be controlled, thereby effectively suppressing current surge in the synchronous rectification circuit. Therefore, the embodiments of the present disclosure can be advantageous in ensuring safe operation of the switch in the DCDC circuit, thereby facilitating safe start-up of the DCDC circuit.

### BRIEF DESCRIPTION OF THE DRAWINGS

FIG. 1 is a schematic view of an LLC circuit topology provided by related arts.
FIG. 2 is a structural schematic view of a bootstrap half-bridge control circuit provided by related arts.
FIG. 3 is a schematic view of a voltage difference between a BOOT voltage and a voltage at the SW point and a resonant current provided by related arts.
FIG. 4 is a structural schematic view of a DCDC circuit provided by some embodiments of the present disclosure.
FIG. 5 is a structural schematic view of a DCDC circuit provided by some other embodiments of the present disclosure.
FIG. 6 is a schematic view of a driving signal, a voltage at the SW point, and a resonant current of upper and lower switches provided by some embodiments of the present disclosure.
FIG. 7 is a structural schematic view of a DCDC circuit provided by some other embodiments of the present disclosure.
FIG. 8 is a first schematic view of increasing a pulse width of a driving signal provided by some embodiments of the present disclosure.
FIG. 9 is a second schematic view of pulse width increasing of a driving signal provided by some embodiments of the present disclosure.
FIG. 10 is a third schematic view of pulse width increasing of the driving signal provided by some embodiments of the present disclosure.
FIG. 11 is a fourth schematic view of pulse width increasing of the driving signal provided by some embodiments of the present disclosure.
FIG. 12 is a fifth schematic view of pulse width increasing of the driving signal provided by some embodiments of the present disclosure.
FIG. 13 is a structural schematic view of a DCDC circuit provided by some other embodiments of the present disclosure.
FIG. 14 is a first structural schematic view of a control circuit provided by some embodiments of the present disclosure.
FIG. 15 is a second structural schematic view of a control circuit provided by some embodiments of the present disclosure.
FIG. 16 is a structural schematic view of a DCDC circuit provided by some other embodiments of the present disclosure.
FIG. 17 is a structural schematic view of a DCDC circuit provided by some other embodiments of the present disclosure.
FIG. 18 is a structural schematic view of a DCDC circuit provided by some other embodiments of the present disclosure.
FIG. 19 is a flowchart of a circuit start-up method provided by some embodiments of the present disclosure.

### DETAILED DESCRIPTION OF THE PREFERRED EMBODIMENTS

In order to facilitate the understanding of the present disclosure, the present disclosure will be described more fully below with reference to the relevant drawings. The drawings show some embodiments of the present disclosure. However, the present disclosure can be implemented in many different forms and is not limited to the embodiments described herein. On the contrary, these embodiments are provided for a more thorough and comprehensive understanding of the disclosure of the present disclosure.

It is understood that the terms "first", "second" and the like in the present disclosure are configured to describe various components but these components are not limited by these terms. These terms are only configured to distinguish a component from another component.

It is understood that in the following embodiments, "connection" should be understood as "electrical connection", "communication connection", and the like, if the connected circuits, modules, units, and the like have the transmission of electrical signals or data with each other.

When used here, singular forms of "a", "an", and "the" may also include plural forms, unless the context clearly indicates otherwise. It should also be understood that the terms "including/containing" or "having" specify the existence of the stated features, whole, steps, operations, components, parts, or combinations thereof, but do not exclude the possibility of the existence or addition of one or more other features, whole, steps, operations, components, parts, or combinations thereof.

A Leakage Inductance, Magnetizing Inductance, and Resonant Capacitor (LLC) circuit topology and an LLC direct current transformer (DCX) circuit topology (hereinafter referred to as DCX circuit topology) are common voltage conversion topologies in a high-voltage direct current - direct current (DCDC) circuit. The LLC circuit topology can output a stable voltage by controlling variation of frequency. A main difference between the DCX circuit and the LLC circuit is that frequency of the DCX circuit remains unchanged during normal operation.

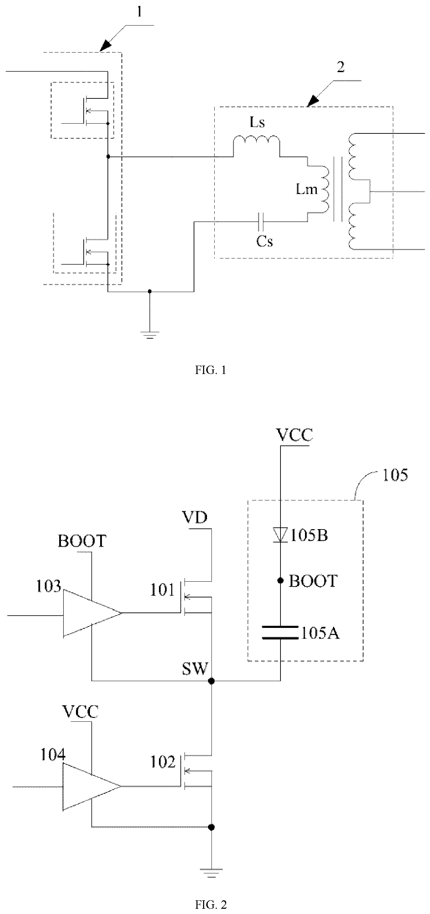

FIG. 1 is a schematic view of an LLC circuit topology provided by related arts. As shown in FIG. 1, the LLC circuit topology may include a half-bridge circuit 1 (or a full-bridge circuit, FIG. 1 shows the half-bridge circuit) and a resonant circuit 2. The resonant circuit 2 may include an independent resonant inductor Ls, a resonant capacitor Cs, and a leakage inductance Lam of a transformer. It should be noted that the DCX circuit topology can refer to the LLC circuit topology structure shown in FIG. 1.

It should be understood that in order to improve a voltage conversion efficiency, a synchronous rectification circuit (not shown in FIG. 1) is typically located at an output terminal of the LLC circuit or an output terminal of the DCX circuit in the DCDC circuit. An advantage of the topology structure is that it can achieve a zero-voltage switching (ZVS) for each switch in the DCDC circuit, which is conducive to improving the voltage conversion efficiency.

With limitations in circuit space structure or cost, the LLC circuit topology and the DCX circuit topology use the leakage inductance of the transformer as the resonant inductor in the resonant circuit, thereby an independent inductor being saved. However, due to the limited inductance of the leakage inductance of the transformer, it cannot have ability to suppress abrupt change of currents like the independent inductor. Therefore, during a start-up process of the DCDC circuit, there may be a problem of an excessive surge current causing damage to the switch. The start-up process of the DCDC circuit can include a start-up process of the LLC circuit topology or a start-up process of the DCX circuit topology, as well as a start-up process of a synchronous rectification circuit.

Various switches involved in the embodiments of the present disclosure may include, but are not limited to, a Metal-Oxide-Semiconductor Field-Effect Transistor (MOS transistor) or a switch prepared using a gallium nitride (GaN) material, such as a Metal-Semiconductor Field Effect Transistor (MESFET), a Heterojunction Field Effect Transistor (HFET), or a Modulation Doped Field Effect Transistor (MODFET).

In order to facilitate the understanding, the following embodiments of the present disclosure takes a NMOS transistor as the switch to introduce the bootstrap half-bridge control method.

In a practical application, the bridge circuit typically adopts the bootstrap half-bridge control method, that is, a driving circuit of an upper switch in the bridge circuit typically uses a bootstrap circuit, the upper switch can be an ungrounded switch in the bridge circuit, and a grounded switch in the bridge circuit can be called a lower switch.

Any bridge circuit involved in the embodiments of the present disclosure may include, but is not limited to, a half-bridge circuit or a full-bridge circuit. It should be understood that the full-bridge circuit can include two parallel half-bridge circuits.

FIG. 2 is a structural schematic view of a bootstrap half-bridge control circuit provided by related arts. As shown in FIG. 2, the half-bridge circuit may include an upper switch 101 and a lower switch 102, a drain of the upper switch 101 is connected to VD, a gate of the upper switch 101 is connected to a first terminal corresponding to a driving circuit 103 for receiving a driving signal sent by a driving circuit 103, and a source of the upper switch 101 is respectively connected to a second terminal of the driving circuit 103, a drain of the lower switch 102, and a first terminal of a bootstrap circuit 105 (an intersection point is called a SW point). A third terminal of the driving circuit 103 is configured to receive a corresponding control signal, and a fourth terminal of the driving circuit 103 is connected to a BOOT terminal of the bootstrap circuit 105.

It should be noted that, when the above-mentioned half-bridge circuit is located in a transformer circuit, the above-mentioned VD can be a voltage input terminal Vbus of the DCDC circuit; and when the above-mentioned half-bridge circuit is located in a synchronous rectification circuit, the above-mentioned VD can be a voltage output terminal Vout of the DCDC circuit.

For example, the transformer circuit involved in the embodiments of the present disclosure may include, but is not limited to, an LLC circuit or a DCX circuit.

For example, the bootstrap circuit 105 may include, but is not limited to, a bootstrap capacitor 105A and a diode 105B, and the BOOT terminal may be a connection terminal between the bootstrap capacitor 105A and the diode 105B.

A gate of the lower switch 102 is connected to a first terminal of the corresponding driving circuit 104, and is configured to receive the driving signal sent by the driving circuit 104. A source of the lower switch 102 and a second terminal of the driving circuit 104 are grounded, a third terminal of the driving circuit 104 is configured to receive a corresponding control signal, and a fourth terminal of the driving circuit 104 and a second terminal of the bootstrap circuit are connected to VCC.

As shown in FIG. 2, when the lower switch 102 conducts, a voltage at the SW point is 0, and a voltage at the VCC is greater than the voltage at the SW point. Therefore, the bootstrap capacitor 105A is in a charging state, to make an electrical energy stored in the bootstrap capacitor 105A increase and thereby increasing a BOOT voltage.

However, when the electrical energy stored in the bootstrap capacitor 105A is small and the BOOT voltage is low, that is, a voltage difference between the BOOT voltage and the voltage at the SW point cannot meet a driving voltage of the upper switch 101, the upper switch 101 cannot conduct normally, resulting in a problem of repeated current interruption.

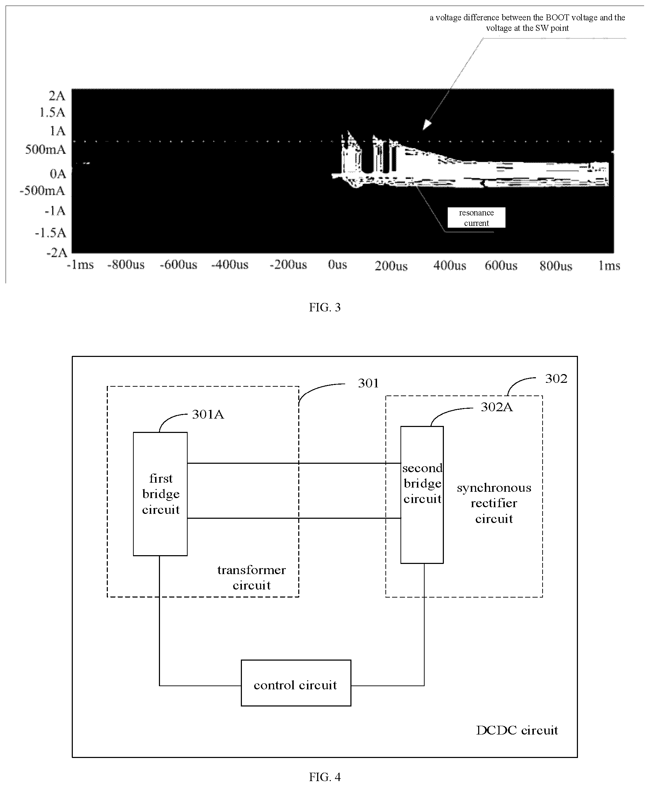

Taking the above-mentioned half-bridge circuit located in the transformer circuit as an example, FIG. 3 is a schematic view of a voltage difference between a BOOT voltage and a voltage at the SW point and a resonant current provided by related arts. As shown in FIG. 3, when the voltage difference between the BOOT voltage and the voltage at the SW point cannot meet the driving voltage of the upper switch, the upper switch cannot conduct normally, resulting in a problem of repeated interruption of the resonant current in the transformer circuit.

In a DCDC circuit, a circuit start-up method, a device, a medium, and a program product provided by some embodiments of the present disclosure, during a start-up process of the transformer circuit, the control circuit controls a turn-on duration of a first switch and a turn-on duration of a second switch in a first bridge circuit of the transformer circuit to increase progressively every switching cycle, to make electrical energy from a voltage input terminal of the DCDC circuit progressively enter a resonant circuit of the transformer circuit, so that current entering the resonant circuit during the start-up process of the transformer circuit can be controlled, thereby effectively suppressing current surge in the resonant circuit. Furthermore, after start-up of the transformer circuit, the control circuit controls a turn-on duration of a third switch and a turn-on duration of a fourth switch in a second bridge circuit of a synchronous rectification circuit to increase progressively every switching cycle, to make electrical energy from the voltage output terminal of the transformer circuit progressively enter the synchronous rectification circuit, so that current entering the synchronous rectification circuit during the start-up process can be controlled, thereby effectively suppressing current surge in the synchronous rectification circuit. Therefore, the embodiments of the present disclosure can be advantageous in ensuring safe operation of the switch in the DCDC circuit, thereby facilitating safe start-up of the DCDC circuit.

In addition, by controlling an initial turn-on duration of a lower switch in the first bridge circuit and the second bridge circuit to be greater than that of the upper switch, it can be ensured that the bootstrap capacitor corresponding to the upper switch in the above bridge circuit can store sufficient electrical energy during a conduction process of the corresponding lower switch, so that the BOOT voltage can meet the driving voltage of the upper switch, which makes the corresponding upper switch reliably conduct during the start-up process of the DCDC circuit, thereby preventing the problem of the repeated interruption of the current caused by the low BOOT voltage.

In some embodiments, FIG. 4 is a structural schematic view of a DCDC circuit provided by some embodiments of the present disclosure. As shown in FIG. 4, the DCDC circuit provided by the embodiments of the present disclosure may include a transformer circuit 301, a synchronous rectification circuit 302, and a control circuit 303. For example, the transformer circuit involved in the embodiments of the present disclosure may include, but is not limited to, the LLC circuit or the DCX circuit.

The DCDC circuit provided by the embodiments of the present disclosure may also include other circuits, such as a rectifier bridge circuit, a power factor correction (PFC) circuit, and/or a voltage regulator circuit. It should be noted that the transformer circuit 301 can be a front-end circuit of the synchronous rectification circuit 302, the rectifier bridge circuit and the PFC circuit can be the front-end circuit of transformer circuit 301, and the voltage regulator circuit can be a back-end circuit of the synchronous rectification circuit 302.

For example, the transformer circuit 301 involved in the embodiments of the present disclosure may include, but is not limited to, a first bridge circuit 301A, and the first bridge circuit 301A may include, but is not limited to, a first switch and a second switch (not shown in FIG. 4). The synchronous rectification circuit 302 may include, but is not limited to, a second bridge circuit 302A, and the second bridge circuit 302A may include, but is not limited to, a third switch and a fourth switch (not shown in FIG. 4). It should be understood that the transformer circuit 301 may also include a resonant circuit (not shown in FIG. 4), and the resonant circuit is located between the first bridge circuit 301A and the second bridge circuit 302A.

It should be understood that the control circuit 303 can be connected to the first bridge circuit 301A in the transformer circuit 301, to control on/off states of the first switch and the second switch in the first bridge circuit 301A. The control circuit 303 can be connected to the second bridge circuit 302A in the synchronous rectification circuit 302 to control on/off states of the third switch and the fourth switch in the second bridge circuit 302A.

In the embodiments of the present disclosure, the control circuit 303 is configured to control the turn-on duration of the first switch and the turn-on duration of the second switch in the first bridge circuit 301A of the transformer circuit 301 to increase progressively every switching cycle until an output voltage of the transformer circuit 301 is greater than a first target voltage.

It should be understood that the start-up process of the DCDC circuit in the embodiments of the present disclosure may include a start-up process of the transformer circuit 301 and a start-up process of the synchronous rectification circuit 302.

The start-up process of the transformer circuit 301 may include, but is not limited to, a process of increasing the output voltage of the transformer circuit 301 from zero to the first target voltage. The process of increasing the output voltage of the transformer circuit 301 from zero to the first target voltage typically requires a plurality of switching cycles of the switch in the first bridge circuit 301A. The switching cycle refers to a total duration of the turn-on duration and a turn-off duration of the switch during a cycle. It should be understood that the switching cycles of each switch in the first bridge circuit 301A are the same.

Similarly, the start-up process of the synchronous rectification circuit 302 may include, but is not limited to, a process of increasing the output voltage of the synchronous rectification circuit 302 from an initial voltage to a second target voltage. The process of increasing the output voltage of the synchronous rectification circuit 302 from the initial voltage to the second target voltage typically requires a plurality of switching cycles of the switch in the second bridge circuit 302A. It should be understood that the switching cycles of each switch in the second bridge circuit 302A are the same.

In the operation, during the start-up process of the transformer circuit 301, the control circuit 303 controls the turn-on duration of the first switch and the turn-on duration of the second switch in the first bridge circuit 301A of the transformer circuit 301 to increase progressively every switching cycle, to make the electrical energy from the voltage input terminal of the DCDC circuit progressively enter the resonant circuit of the transformer circuit 301, so that the current entering the resonant circuit during the start-up process of the transformer circuit 301 can be controlled, thereby effectively suppressing the current surge in the resonant circuit and avoiding a problem of damage to the switch caused by excessive surge current.

It should be understood that in condition of the transformer circuit 301 being started, the turn-on duration of the first switch and the second switch in the first bridge circuit 301A during the switching cycle will reach a first preset duration, and the first preset duration may be less than or equal to half of the switching cycle.

A first initial turn-on duration of the first switch corresponding to a first switching cycle (hereinafter referred to as the first initial turn-on duration) is different from a second initial turn-on duration of the second switch corresponding to the first switching cycle (hereinafter referred to as the second initial turn-on duration).

In one possible implementation, in condition of the first switch being the upper switch in the first bridge circuit 301A (e.g., an ungrounded switch in the first bridge circuit 301A), and the second switch being the lower switch in the first bridge circuit 301A (e.g., a grounded switch in the first bridge circuit 301A), the first initial turn-on duration of the first switch may be less than the second initial turn-on duration of the second switch.

For example, during the start-up process of the transformer circuit 301, the control circuit 303 can control the turn-on duration of the first switch in the first bridge circuit 301A of the transformer circuit 301 to increase progressively from the first initial turn-on duration to the first preset duration during the switching cycle, and control the turn-on duration of the second switch in the first bridge circuit 301A to increase progressively from the second initial turn-on duration to the first preset duration during the switching cycle. The first initial turn-on duration can be zero, and the second initial turn-on duration is greater than zero but less than half of the switching cycle.

In another possible implementation, in condition of the first switch being the lower switch in the first bridge circuit 301A and the second switch being the upper switch in the first bridge circuit 301A, the first initial turn-on duration of the first switch may be greater than the second initial turn-on duration of the second switch.

For example, during the start-up process of the transformer circuit 301, the control circuit 303 can control the turn-on duration of the first switch in the first bridge circuit 301A of the transformer circuit 301 to increase progressively from the first initial turn-on duration to the first preset duration during the switching cycle, and control the turn-on duration of the second switch in the first bridge circuit 301A to increase progressively from the second initial turn-on duration to the first preset duration during the switching cycle. The second initial turn-on duration can be zero, and the first initial turn-on duration is greater than zero but less than half of the switching cycle.

As shown in FIG. 2, the control circuit 303 can ensure that the corresponding bootstrap capacitor can store sufficient electrical energy during a conduction process of the lower switch in the first bridge circuit 301A by controlling the initial turn-on duration of the lower switch to be greater than that of the upper switch, to make the BOOT voltage meet the driving voltage of the upper switch, so that the upper switch can reliably conduct during the start-up process of the transformer circuit, thereby preventing the problem of repeated interruption of the resonant current caused by the low BOOT voltage.

It should be noted that, considering a short duration required for the start-up process of the transformer circuit and body diodes of the third switch and fourth switch, in the embodiments of the present disclosure, during the start-up process of the transformer circuit 301, only the on/off states of the first switch and second switch in the first bridge circuit 301A of the transformer circuit 301 need to be controlled, without controlling the on/off states of the third switch and the fourth switch in the second bridge circuit 302A of the synchronous rectification circuit 302. Therefore, compared with a method of simultaneously controlling the start-up of the transformer circuit and the start-up of the synchronous rectification circuit, the circuit start-up method in the embodiments of the present disclosure is relatively simple.

Furthermore, the control circuit 303 is also configured to control a turn-on duration of the third switch and a turn-on duration of the fourth switch in the second bridge circuit 302A of the synchronous rectification circuit 302 to increase progressively every switching cycle until the output voltage of the synchronous rectification circuit 302 is greater than the second target voltage.

In this step, during the start-up process of the synchronous rectification circuit 302, the control circuit 303 controls the turn-on duration of the third switch and the turn-on duration of the fourth switch in the second bridge circuit 302A of the synchronous rectification circuit 302 to increase progressively every switching cycle, to make the electric energy from the voltage output terminal of the transformer circuit 301 progressively enter the synchronous rectification circuit 302, so that the current entering the synchronous rectification circuit 302 during the start-up process can be controlled, thereby effectively suppressing the current surge in the synchronous rectification circuit 302 and avoiding the problem of damage to the switch caused by excessive surge current.

It should be noted that the third switch and the fourth switch in the second bridge circuit 302A will not conduct simultaneously during the same switching cycle.

It should be understood that in condition of the synchronous rectification circuit 302 being started, the turn-on duration of the third switch and the fourth switch in the second bridge circuit 302A during the switching cycle will reach a second preset duration, and the second preset duration can be less than or equal to the first preset duration, thereby preventing the problem of reverse conduction of the third switch and the fourth switch.

A third initial turn-on duration of the third switch corresponding to the first switching cycle (hereinafter referred to as the third initial turn-on duration) is different from a fourth initial turn-on duration of the fourth switch corresponding to the first switching cycle (hereinafter referred to as the fourth initial turn-on duration).

In one possible implementation, in condition of the third switch being the upper switch in the second bridge circuit 302A (e.g., an ungrounded switch in the second bridge circuit 302A) and the fourth switch being the lower switch in the second bridge circuit 302A (e.g., a grounded switch in the second bridge circuit 302A), the third initial turn-on duration of the third switch may be less than the fourth initial turn-on duration of the fourth switch. The upper switch in the second bridge circuit 302A can also be other switches (such as the switch located at an upper part of the second bridge circuit 302A), and the lower switch in the second bridge circuit 302A can also be other switches (such as the switch located at a lower part of the second bridge circuit 302A), and there are no limitations herein in the embodiments of the present disclosure.

For example, during the start-up process of the synchronous rectification circuit 302 after start-up of the transformer circuit 301, the control circuit 303 can control the turn-on duration of the third switch in the second bridge circuit 302A of the synchronous rectification circuit 302 to increase progressively from the third initial turn-on duration to the second preset duration during the switching cycle, and control the turn-on duration of the fourth switch in the second bridge circuit 302A to increase progressively from the fourth initial turn-on duration to the second preset duration during the switching cycle. The third initial turn-on duration can be zero, and the fourth initial turn-on duration is greater than zero and less than half of the switching cycle.

In another possible implementation, in condition of the third switch being the lower switch in the second bridge circuit 302A and the second switch being the upper switch in the second bridge circuit 302A, the third initial turn-on duration of the third switch can be greater than the fourth initial turn-on duration of the fourth switch.

For example, during the start-up process of the synchronous rectification circuit after the start-up of the transformer circuit, the control circuit 303 can control the turn-on duration of the third switch in the second bridge circuit 302A of the synchronous rectification circuit 302 to increase progressively from the third initial turn-on duration to the second preset duration during the switching cycle, and control the turn-on duration of the fourth switch in the second bridge circuit 302A to increase progressively from the fourth initial turn-on duration to the second preset duration during the switching cycle. The fourth initial turn-on duration can be zero, and the third initial turn-on duration is greater than zero and less than half of the switching cycle.

As shown in FIG. 2, the control circuit 303 can ensure that the corresponding bootstrap capacitor can store sufficient electrical energy during a conduction process of the lower switch in the second bridge circuit 302A by controlling the initial turn-on duration of the lower switch to be greater than that of the upper switch, to make the BOOT voltage meet the driving voltage of the upper switch, so that the upper switch can reliably conduct during the start-up process of the synchronous rectification circuit, thereby preventing the problem of repeated interruption of the synchronous rectification current caused by the low BOOT voltage.

It should be noted that in the embodiments of the present disclosure, during the start-up process of the transformer circuit, it is only necessary to control the on/off states of the first switch and the second switch in the first bridge circuit of the transformer circuit, without controlling the on/off states of the third switch and the fourth switch in the second bridge circuit of the synchronous rectification circuit. Furthermore, the on/off states of the third switch and the fourth switch in the second bridge circuit of the synchronous rectification circuit are controlled only after start-up of the transformer circuit. It can be seen that the start-up method of the control circuit in the embodiments by controlling the on/off states of the switches in the transformer circuit and the synchronous rectification circuit in stages is relatively simple, compared to the method of simultaneously controlling the start-up of the transformer circuit and the start-up of the synchronous rectification circuit.

In summary, in the DCDC circuit provided by some embodiments of the present disclosure, during the start-up process of the transformer circuit, the control circuit controls the turn-on duration of the first switch and the turn-on duration of the second switch in the first bridge circuit of the transformer circuit to increase progressively every switching cycle, to make electrical energy from the voltage input terminal of the DCDC circuit progressively enter the resonant circuit of the transformer circuit, so that the current entering the resonant circuit during the start-up process of the transformer circuit can be controlled, thereby effectively suppressing current surge in the resonant circuit. Furthermore, after the start-up of the transformer circuit, the control circuit controls the turn-on duration of the third switch and the turn-on duration of the fourth switch in the second bridge circuit of the synchronous rectification circuit to increase progressively every switching cycle, to make electrical energy from the voltage output terminal of the transformer circuit progressively enter the synchronous rectification circuit, so that of the current entering the synchronous rectification circuit during the start-up process can be controlled, thereby effectively suppressing current surge in the synchronous rectification circuit. Therefore, the embodiments of the present disclosure can be advantageous in ensuring safe operation of the switch in the DCDC circuit, thereby facilitating safe start-up of the DCDC circuit.

In addition, during the start-up process of the transformer circuit in the embodiments of the present disclosure, the control circuit only needs to control the on/off states of the first switch and the second switch in the first bridge circuit of the transformer circuit, without controlling the on/off states of the third switch and the fourth switch in the second bridge circuit of the synchronous rectification circuit. Furthermore, after the start-up of the transformer circuit is completed, the control circuit controls the on/off states of the third switch and the fourth switch in the second bridge circuit of the synchronous rectification circuit. It can be seen that, the start-up method of the control circuit in the embodiments by controlling the on/off states of the switches in the transformer circuit and the synchronous rectification circuit in stages is relatively simple, compared to the method of simultaneously controlling the start-up of the transformer circuit and the synchronous rectification circuit. In addition, the method of controlling the transformer circuit and synchronous rectification circuit through the same control circuit in the embodiments of the present disclosure can be applied to high-frequency and higher operating frequencies, which is conducive to increasing operating frequency of an electronic device and reducing device size.

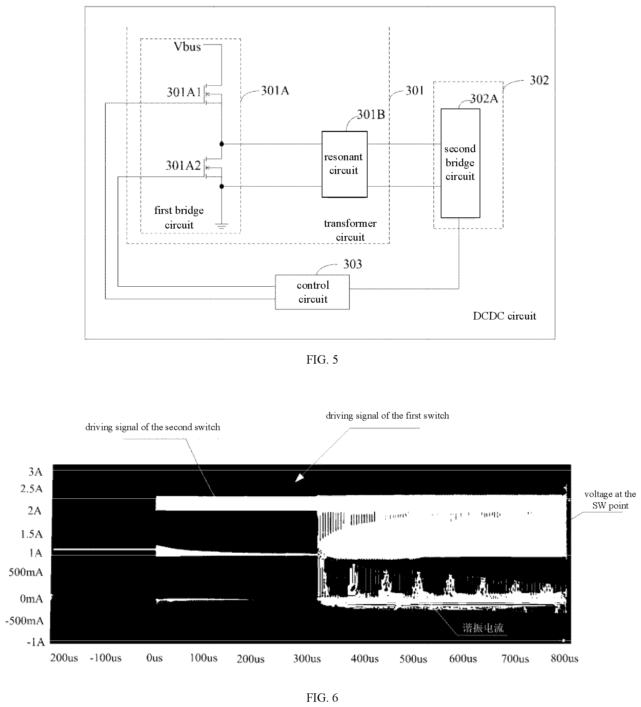

In some embodiments, FIG. 5 is a structural schematic view of a DCDC circuit provided by some other embodiments of the present disclosure. Based on the above embodiments, the present disclosure introduces a feasible implementation of the first bridge circuit. As shown in FIG. 5, the first bridge circuit 301A in the embodiments of the present disclosure can be a half-bridge circuit, and a first switch 301A1 in the first bridge circuit 301A can be connected to a voltage input terminal Vbus of the DCDC circuit, that is, the first switch 301A1 is the upper switch in the first bridge circuit 301A. It should be noted that the first switch 301A1 is connected to the voltage input terminal Vbus of the DCDC circuit. When the first switch 301A1 is in an on state, the front-end circuit of the transformer circuit inputs energy to the transformer circuit through the voltage input terminal, causing current to flow to a resonant circuit 301B in the transformer circuit 301.

For example, control terminals (such as gates) of the first switch 301A1 and the second switch 301A2 are respectively connected to the control circuit 303, so that the control circuit 303 can control the on/off states of the first switch 301A1 and the second switch 301A2.

For example, a first terminal of resonant circuit 301B can be connected to a connection point between the first switch 301A1 and the second switch 301A2, and a second terminal of resonant circuit 301B can be grounded with the other terminal of the second switch 301A2, that is, the second switch 301A2 is the lower switch in the first bridge circuit 301A. The first initial turn-on duration of the first switch 301A1 is less than the second initial turn-on duration of the second switch 301A2 in the first bridge circuit 301A.

In the embodiments of the present disclosure, during the start-up process of the transformer circuit, the control circuit 303 controls the turn-on duration of the first switch 301A1 in the first bridge circuit 301A to increase progressively from the first initial turn-on duration during the switching cycle, and controls the turn-on duration of the second switch 301A2 to increase progressively from the second initial turn-on duration during the switching cycle. The first initial turn-on duration can be zero, and the second initial turn-on duration is greater than zero and less than half of the switching cycle, to make electric energy from the voltage input terminal of the DCDC circuit progressively enter the resonant circuit of the transformer circuit, so that the current entering the resonant circuit during the start-up process of the transformer circuit can be controlled, thereby effectively suppressing the current surge in the resonant circuit and ensuring safe start-up of the transformer circuit.

In addition, FIG. 6 is a schematic view of a driving signal, a voltage at the SW point, and a resonant current of upper and lower switches provided by some embodiments of the present disclosure. Combining FIG. 2, FIG. 5, and FIG. 6, the control circuit 303 can ensure that the bootstrap capacitor in the bootstrap circuit corresponding to the first switch 301A1 can store sufficient electrical energy during the conduction process of the second switch 301A2 by controlling the second initial turn-on duration of the second switch 301A2 in the first bridge circuit 301A to be greater than the first initial turn-on duration of the first switch 301A1, to make the BOOT voltage meet the driving voltage of the first switch 301A1 (i.e., a voltage difference between the BOOT voltage and the voltage at the SW point can meet the requirements), so that the first switch 301A1 can reliably conduct during the start-up process of the transformer circuit, thereby ensuring the continuity of the resonant current (i.e., without repeated interruption).

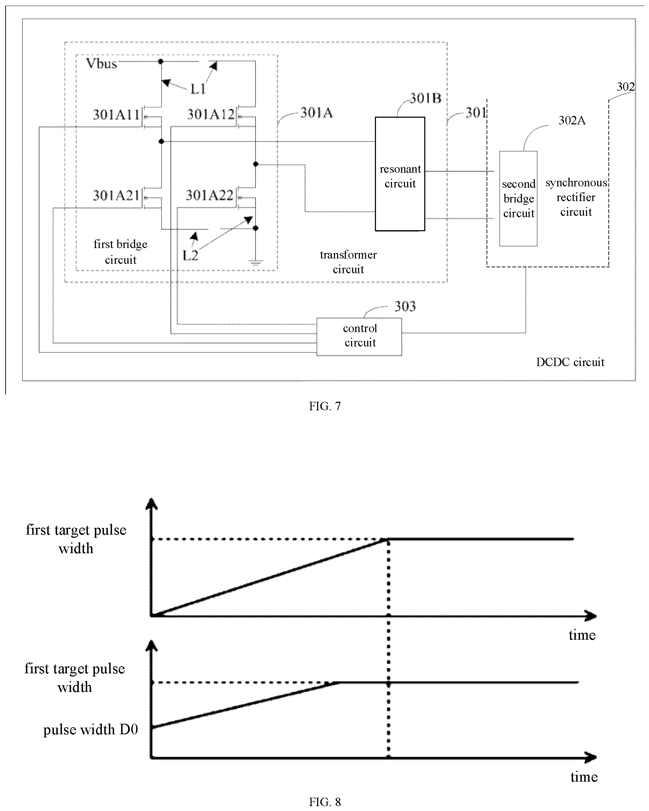

In some embodiments, FIG. 7 is a structural schematic view of a DCDC circuit provided by some other embodiments of the present disclosure. Based on the above embodiments, the present disclosure introduces another feasible implementation of the first bridge circuit. As shown in FIG. 7, the first bridge circuit 301A in the embodiments of the present disclosure can be a full-bridge circuit, and the first switch in the first bridge circuit 301A can include a switch 301A11 and a switch 301A12 located at a first bridge arm L1 of the first bridge circuit 301A. The second switch in the first bridge circuit 301A can include a switch 301A21 and a switch 301A22 located at a second bridge arm L2 of the first bridge circuit 301A.The first switch (including the switch 301A11 and the switch 301A12) can be connected to the voltage input terminal Vbus of the DCDC circuit, that is, the first switch (including the switch 301A11 and the switch 301A12) is the upper switch in the first bridge circuit 301A.

For example, control terminals (such as gates) of the switch 301A11, the switch 301A12, the switch 301A21, and the switch 301A22 are respectively connected to the control circuit 303, so that the control circuit 303 can control the on/off states of the switch 301A11, the switch 301A12, the switch 301A21, and the switch 301A22, respectively.

For example, a first terminal of resonant circuit 301B can be connected to a connection point between the switch 301A11 and the switch 301A21, a second terminal of the resonant circuit 301B can be connected to a connection point between the switch 301A12 and the switch 301A22, and the other terminal of the switch 301A21 and the switch 301A22 is grounded, that is, the second switch (including the switch 301A21 and the switch 301A22) is the lower switch in the first bridge circuit 301A. The first initial turn-on duration of the first switch (including the switch 301A11 and the switch 301A12) is less than the second initial turn-on duration of the second switch (including the switch 301A21 and the switch 301A22).

It should be understood that switch 301A11 cannot be simultaneously conducted with the switch 301A12 or the switch 301A21; the switch 301A11 can be simultaneously conducted with the switch 301A22; the switch 301A12 cannot be simultaneously conducted with the switch 301A11 or the switch 301A22; and the switch 301A12 can be simultaneously conducted with the switch 301A21.

It should be noted that the first switch (including the switch 301A11 and the switch 301A12) is connected to the voltage input terminal Vbus of the DCDC circuit. When the switch 301A11 and the switch 301A22 are in on states, or when the switch 301A12 and the switch 301A21 are in on states, the front-end circuit of the transformer circuit inputs energy to the transformer circuit through the voltage input terminal, causing current to flow to the resonant circuit in the transformer circuit.

In the embodiments of the present disclosure, during the start-up process of the transformer circuit, the control circuit 303 controls the turn-on duration of the first switch (including the switch 301A11 and the switch 301A12) in the first bridge circuit 301A to increase progressively from the first initial turn-on duration during the switching cycle, and controls the turn-on duration of the second switch (including the switch 301A21 and the switch 301A22) to increase progressively from the second initial turn-on duration during the switching cycle. The first initial turn-on duration can be zero, and the second initial turn-on duration is greater than zero but less than half of the switching cycle.

For example, during the start-up process of the transformer circuit, the control circuit 303 controls the turn-on duration of the switch 301A11 in the first bridge circuit 301A to increase progressively from the first initial turn-on duration in the switching cycle, and controls the turn-on duration of the switch 301A22 to increase progressively from the second initial turn-on duration during the switching cycle, to make electric energy from the voltage input terminal of the DCDC circuit progressively enter the resonant circuit in the transformer circuit, so that the current entering the resonant circuit can be controlled, thereby effectively suppressing the current surge in the resonant circuit.

For another example, during the start-up process of the transformer circuit, the control circuit 303 controls the turn-on duration of the switch 301A12 in the first bridge circuit 301A to increase progressively from the first initial turn-on duration during the switching cycle, and controls the turn-on duration of the switch 301A21 to increase progressively from the second initial turn-on duration during the switching cycle, to make electric energy from the voltage input terminal of the DCDC circuit progressively enter the resonant circuit of the transformer circuit, so that the current entering the resonant circuit can be controlled, thereby effectively suppressing the current surge in the resonant circuit.

Furthermore, as shown in FIG. 2 and FIG. 7, on the one hand, the control circuit 303 can ensure that the bootstrap capacitor in the bootstrap circuit corresponding to the switch 301A11 can store sufficient electrical energy during the conduction process of the switch 301A21 by controlling the second initial turn-on duration of the switch 301A21 in the first bridge circuit 301A to be greater than the first initial turn-on duration of the switch 301A11, to make the BOOT voltage meet the driving voltage of the switch 301A11, so that the switch 301A11 can reliably conduct during the start-up process of the transformer circuit.

On the other hand, the control circuit 303 can ensure that the bootstrap capacitor in the bootstrap circuit corresponding to the switch 301A12 can store sufficient electrical energy during the conduction process of the switch 301A22 by controlling the second initial turn-on duration of the switch 301A22 to be greater than the first initial turn-on duration of the switch 301A12, to make the BOOT voltage meet the driving voltage of the switch 301A12, so that the switch 301A12 can reliably conduct during the start-up process of the transformer circuit.

It can be seen that in the embodiments of the present disclosure, the control circuit 303 controls the second initial turn-on duration of the second switch (including the switch 301A21 and the switch 301A22) to be greater than the first initial turn-on duration of the first switch (including the switch 301A11 and the switch 301A12), so that the first switch (including the switch 301A11 and the switch 301A12) can reliably conduct during the start-up process of the transformer circuit, thereby ensuring the continuity of the resonant current.

On the basis of the above embodiments, the following embodiments of the present disclosure introduce a feasible method of making the turn-on duration of the first switch and the second switch in the first bridge circuit of the transformer circuit controlled by the control circuit increase progressively every switching cycle.

Alternatively, in the embodiments of the present disclosure, the control circuit can make the turn-on duration of the first switch and the second switch increase progressively every switching cycle by controlling a pulse width of the driving signal of the first switch and second switch to increase progressively every switching cycle.

For example, any driving signal involved in the embodiments of the present disclosure may include, but is not limited to, a pulse width modulation (PWM) signal.

It should be noted that due to the difference in the first initial turn-on duration of the first switch and the second initial turn-on duration of the second switch, a first initial pulse width of the driving signal of the first switch corresponding to the first switching cycle (hereinafter referred to as the first initial pulse width of the driving signal of the first switch) is different from a second initial pulse width of the driving signal of the second switch corresponding to the first switching cycle (hereinafter referred to as the second initial pulse width of the driving signal of the second switch).

In one possible implementation, in condition of the first switch being the upper switch in the first bridge circuit (i.e., the ungrounded switch in the first bridge circuit) and the second switch being the lower switch in the first bridge circuit (i.e., the grounded switch in the first bridge circuit), the first initial turn-on duration of the first switch can be less than the second initial turn-on duration of the second switch, and the first initial pulse width of the driving signal of the first switch is less than the second initial pulse width of the driving signal of the second switch.

For example, during the start-up process of the transformer circuit, the control circuit can control the pulse width of the driving signal of the first switch in the first bridge circuit of the transformer circuit to increase progressively from a first initial pulse width to a first target pulse width, and control the pulse width of the driving signal of the second switch in the first bridge circuit to increase progressively from a second initial pulse width to a first target pulse width. The first initial pulse width can be zero, the second initial pulse width is greater than zero and less than the first target pulse width, and the first target pulse width can be less than or equal to half of the switching cycle (or a pulse cycle). It should be understood that the turn-on duration corresponding to the first target pulse width is a first preset duration.

In another possible implementation, in condition of the first switch being the lower switch in the first bridge circuit and the second switch being the upper switch in the first bridge circuit, the first initial turn-on duration of the first switch can be greater than the second initial turn-on duration of the second switch, and the first initial pulse width of the driving signal of the first switch is greater than the second initial pulse width of the driving signal of the second switch.

For example, in the process of the transformer circuit, the control circuit can control the pulse width of the driving signal of the first switch in the first bridge circuit of the transformer circuit to increase progressively from the first initial pulse width to the first target pulse width, and control the pulse width of the driving signal of the second switch in the first bridge circuit to increase progressively from the second initial pulse width to the first target pulse width. The second initial pulse width can be zero, and the first initial pulse width is greater than zero and less than the first target pulse width.

It should be noted that due to difference between the first initial pulse width of the driving signal of the first switch and the second initial pulse width of the driving signal of the second switch, a duration required for the pulse width of the driving signal of the first switch to increase to the first target pulse width is different from a duration required for the pulse width of the driving signal of the first switch to increase to the first target pulse width.

FIG. 8 is a first schematic view of increasing a pulse width of a driving signal provided by some embodiments of the present disclosure. Assuming that the first initial pulse width of the driving signal of the first switch is zero, and the second initial pulse width of the driving signal of the second switch is pulse width D0, as shown in FIG. 8, the control circuit can control the pulse width of the driving signal of the first switch and the pulse width of the driving signal of the second switch to increase synchronously. The duration of the pulse width of the driving signal of the second switch increasing from the second initial pulse width to the first target pulse width is less than the duration of the pulse width of the driving signal of the first switch increasing from the first initial pulse width to the first target pulse width.

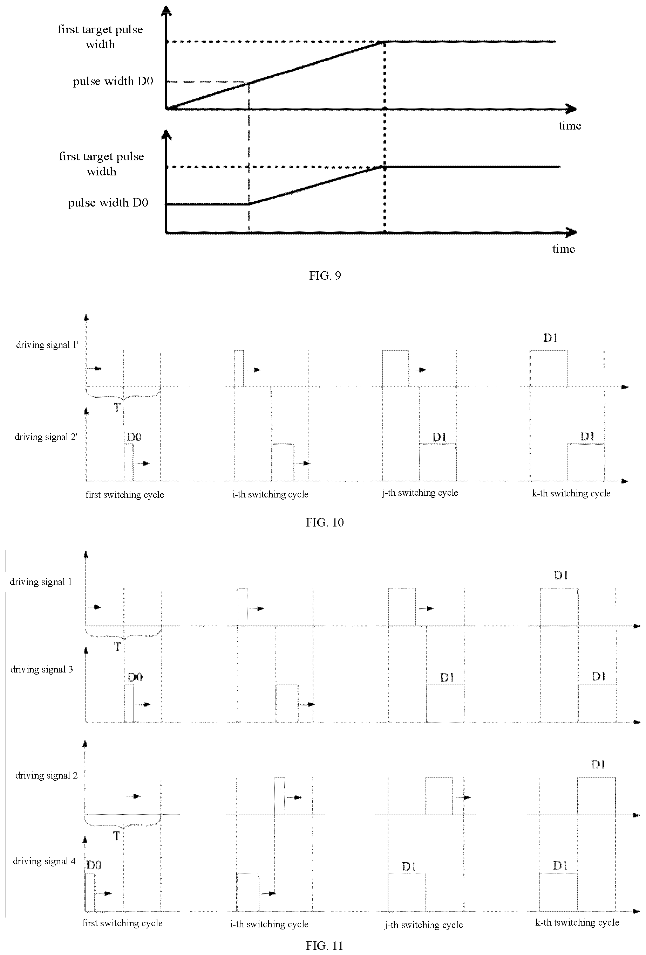

FIG. 9 is a second schematic view of pulse width increasing of a driving signal provided by some embodiments of the present disclosure. Assuming that the first initial pulse width of the driving signal of the first switch is zero, and the second initial pulse width of the driving signal of the second switch is D0, as shown in FIG. 9, the control circuit can control the pulse width of the driving signal of the first switch to increase progressively from the first initial pulse width to D0, and then control the pulse width of the driving signal of the first switch and the pulse width of the driving signal of the second switch to synchronously increase from the second initial pulse width to the first target pulse width.

In some embodiments, the control circuit can be configured to control the pulse width of the driving signal of the first switch and the pulse width of the driving signal of the second switch to increase by a first preset pulse width every n switching cycles, and n is a positive integer. The first preset pulse width can be a fixed value, or can increase with increase of the switching cycle during the start-up process of the transformer circuit. For example, the first preset pulse width can be increased by a third preset pulse width every first preset switching cycle, and the third preset pulse width can be a fixed value.

It should be understood that in the embodiments, the control circuit can control the pulse width of the driving signal of the first switch to increase by a first preset pulse width 1 every n1 switching cycles, and can control the pulse width of the driving signal of the second switch to increase by a first preset pulse width 2 every n2 switching cycles, n1 and n2 are positive integers, n1 and n2 can be the same or different, and the first preset pulse width 1 and the first preset pulse width 2 can be the same or different.

In some embodiments, the control circuit can be configured to randomly increase the pulse width of the driving signal of the first switch and the pulse width of the driving signal of the second switch every at least one switching cycle.

In some embodiments, the control circuit can be configured to control the pulse width of the driving signal of the first switch and the pulse width of the driving signal of the second switch to increase progressively along a direction every switching cycle.

It should be understood that the control circuit can control the pulse width of the driving signal of the first switch and the pulse width of the driving signal of the second switch to increase progressively along a direction by the first preset pulse width every n switching cycles, or randomly increase any pulse width every at least one switching cycle.

FIG. 10 is a third schematic view of pulse width increasing of the driving signal provided by some embodiments of the present disclosure. Assuming that the first bridge circuit is the half-bridge circuit as shown in FIG. 5, a first initial pulse width of a driving signal 1' of the first switch in the first bridge circuit is zero in a first switching cycle T, and a second initial pulse width a driving signal 2' of the second switch is D0 in the first switching cycle. As shown in FIG. 10, the control circuit can control the pulse width of the driving signal 1' of the first switch and the pulse width of the driving signal 2' of the second switch to increase progressively along a direction to a first target pulse width D1.

For example, the pulse width of the driving signal 1' of the first switch increases progressively from zero over k switching cycles to the first target pulse width D1, and the pulse width of the driving signal 2' of the second switch increases progressively from the pulse width D0 over j switching cycles to the first target pulse width D1, and i is an integer greater than 1, j is an integer greater than i, and k is an integer greater than j.

FIG. 11 is a fourth schematic view of pulse width increasing of the driving signal provided by some embodiments of the present disclosure. Assuming that the first bridge circuit is the full-bridge circuit as shown in FIG. 7, the first switch in the first bridge circuit may include the switch 301A11 and the switch 301A12 located at the first bridge arm of the first bridge circuit, and the second switch in the first bridge circuit may include the switch 301A21 and the switch 301A22 located at the second bridge arm of the first bridge circuit. As shown in FIG. 11, the first initial pulse width of the driving signal 1 of the switch 301A11 and the first initial pulse width of the driving signal 2 of the switch 301A12 are zero, and the second initial pulse width of the driving signal 3 of the switch 301A21 and the second initial pulse width of the driving signal 4 of the switch 301A22 are the pulse width D0. The control circuit can control the pulse width of the driving signal 1 of the switch 301A11, the driving signal 2 of the switch 301A12, the driving signal 3 of the switch 301A21, and the driving signal 4 of the switch 301A22 to increase progressively along a direction to the first target pulse width D1.

For example, the pulse width of the driving signal 1 of the switch 301A11 and the pulse width of the driving signal 2 of the switch 301A12 increase progressively from zero to the first target pulse width D1 after k switching cycles, and the pulse width of the driving signal 3 of the switch 301A21 and the pulse width of the driving signal 4 of the switch 301A22 increase progressively from pulse width D0 to the first target pulse width D1 after j switching cycles.

In some embodiments, the control circuit can be configured to control the pulse width of the driving signal of the first switch and the pulse width of the driving signal of the second switch to increase progressively along two opposite directions every switching cycle.

It should be noted that in the embodiments, the initial pulse width of the driving signal of the first switch and the initial pulse width of the driving signal of the second switch can be located at middle of a corresponding half switching cycle, to increase progressively along two opposite directions.

It should be understood that the control circuit can control the pulse width of the driving signal of the first switch and the driving signal of the second switch to increase progressively along two opposite directions by first preset pulse width every n switching cycles, or randomly increase any pulse width every at least one switching cycle.

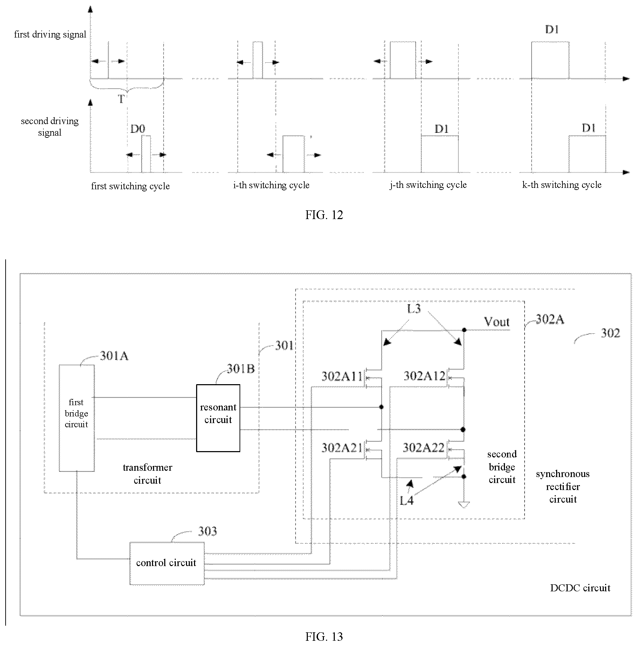

FIG. 12 is a fifth schematic view of pulse width increasing of the driving signal provided by some embodiments of the present disclosure. Assuming that the first initial pulse width of the first driving signal of the first switch is zero at the first switching cycle, and the second initial pulse width of the second driving signal of the second switch is the pulse width D0 at the first switching cycle, as shown in FIG. 12. The control circuit can control the pulse width of the first driving signal of the first switch and the pulse width of the second driving signal of the second switch to increase progressively along two opposite directions to the first target pulse width.

For example, the pulse width of the first driving signal of the first switch increases progressively from zero in opposite directions to the first target pulse width D1 over k switching cycles, while the pulse width of the second driving signal of the second switch increases progressively from a pulse width D0 in opposite directions to the first target pulse width D1 over j switching cycles.

The control circuit can also control the pulse width of the driving signal of the first switch and the pulse width of the driving signal of the second switch to increase progressively through other means, and there are no limitations herein in the embodiments of the present disclosure.

In summary, in the embodiments of the present disclosure, the control circuit can more accurately control the current entering the resonant circuit during the start-up process of the transformer circuit by increasing the pulse width of the driving signal of the first switch and the pulse width of the driving signal of the second switch progressively every switching cycle, thereby effectively suppressing the current surge in the resonant circuit.

In some embodiments, FIG. 13 is a structural schematic view of a DCDC circuit provided by some other embodiments of the present disclosure. Based on the above embodiments, the present disclosure introduces a feasible implementation of the second bridge circuit. As shown in FIG. 13, the second bridge circuit of the embodiments of the present disclosure can be the full-bridge circuit. The third switch in the second bridge circuit 302A can include a switch 302A11 and a switch 302A12 located at the third bridge arm L3 of the second bridge circuit. The fourth switch in the second bridge circuit 302A can include a switch 302A21 and a switch 302A22 located at the fourth bridge arm L4 of the second bridge circuit. The third switch (including the switch 302A11 and the switch 302A12) can be connected to the voltage output terminal Vout of the DCDC circuit, and the fourth switch (including the switch 302A21 and the switch 302A22) can be grounded, that is, the third switch(including the switch 302A11 and the switch 302A12) is the upper switch in the second bridge circuit 302A, and the fourth switch (including the switch 302A21 and the switch 302A22) is the lower switch in the second bridge circuit 302A.

For example, the control terminals (such as gates) of the switches 302A11, 302A12, 302A21, and 302A22 are respectively connected to the control circuit 303, so that control circuit 303 can control the on/off states of the switches 302A11, 302A12, 302A21, and 302A22, respectively.

For example, the first voltage output terminal of the transformer circuit may be connected to a connection point between the switch 302A11 and the switch 302A21, the second voltage output terminal of the transformer circuit may be connected to a connection point between the switch 302A12 and the switch 302A22, the third bridge arm L3 may be connected to the voltage output terminal Vout of the DCDC circuit, and the fourth bridge arm L4 may be grounded. The third initial turn-on duration of the third switch (including the switch 302A11 and the switch 302A12) is less than the fourth initial turn-on duration of the fourth switch (including the switch 302A21 and the switch 302A22).

It should be understood that switch 302A11 cannot be conducted simultaneously with the switch 302A12 or the switch 302A21, and the switch 302A11 can be conducted simultaneously with the switch 302A22; the switch 302A12 cannot be conducted simultaneously with the switch 302A11 or the switch 302A22, and the switch 302A12 can be conducted simultaneously with switch 302A21.

It should be noted that when switch 302A11 and the switch 302A22 are simultaneously conducted, or the switch 302A12 and the switch 302A21 are simultaneously conducted, the voltage output terminal of the transformer circuit inputs energy to the synchronous rectification circuit, to make the current flow to the synchronous rectification circuit.

In the embodiments of the present disclosure, during the start-up process of the synchronous rectification circuit, the control circuit controls the turn-on duration of the third switch (including the switch 302A11 and the switch 302A12) in the second bridge circuit 302A to increase progressively from the third initial turn-on duration during the switching cycle, and controls the turn-on duration of the fourth switch (including the switch 302A21 and the switch 302A22) to increase progressively from the fourth initial turn-on duration during the switching cycle. The third initial turn-on duration can be zero, and the fourth initial turn-on duration is greater than zero but less than half of the switching cycle.

For example, during the start-up process of the synchronous rectification circuit, the control circuit 303 controls the turn-on duration of the switch 302A11 in the second bridge circuit 302A to increase progressively from the third initial turn-on duration during the switching cycle, and controls the turn-on duration of the switch 302A22 to increase progressively from the fourth initial turn-on duration during the switching cycle, to make electric energy from the voltage output terminal of the transformer circuit progressively enter the synchronous rectification circuit, so that the current entering the synchronous rectification circuit during the start-up process can be controlled, thereby effectively suppressing the current surge in the synchronous rectification circuit.

For another example, during the start-up process of the synchronous rectification circuit, the control circuit controls the turn-on duration of the switch 302A12 in the second bridge circuit 302A to increase progressively from the third initial turn-on duration during the switching cycle, and controls the turn-on duration of the switch 302A21 to increase progressively from the fourth initial turn-on duration during the switching cycle, to make electric energy from the voltage output terminal of the transformer circuit progressively enter the synchronous rectification circuit, so that the current entering the synchronous rectification circuit during the start-up process can be controlled, thereby effectively suppressing the current surge in the synchronous rectification circuit.

In addition, as shown in FIG. 2 and FIG. 13, on the one hand, the control circuit 303 can ensure that the bootstrap capacitor in the bootstrap circuit corresponding to the switch 302A11 can store sufficient electrical energy during the conduction process of the switch 302A21 by controlling the fourth initial turn-on duration of the switch 302A21 in the second bridge circuit 302A to be greater than the third initial turn-on duration of the switch 302A11, to make the BOOT voltage meet the driving voltage of the switch 302A11, so that the switch 302A11 can reliably conduct during the start-up process of the synchronous rectification circuit.

On the other hand, the control circuit 303 can ensure that the bootstrap capacitor in the bootstrap circuit corresponding to the switch 302A12 can store sufficient electrical energy during the conduction process of the switch 302A22 by controlling the fourth initial turn-on duration of the switch 302A22 in the second bridge circuit 302A to be greater than the third initial turn-on duration of the switch 302A12, to make the BOOT voltage meet the driving voltage of the switch 302A12, so that the switch 302A12 can reliably conduct during the start-up process of the synchronous rectification circuit.

It can be seen that in the embodiments of the present disclosure, the control circuit 303 controls the fourth initial turn-on duration of the fourth switch (including the switch 302A21 and the switch 302A22) to be greater than the third initial turn-on duration of the third switch (including the switch 302A11 and the switch 302A12), so that the third switch (including the switch 302A11 and the switch 302A12) can reliably conduct during the start-up process of the synchronous rectification circuit, thereby ensuring the continuity of the synchronous rectification current.

The second bridge circuit in the embodiments of the present disclosure can also adopt other circuit forms (such as the half-bridge circuit), and there are not limitations herein in the embodiments of the present disclosure.

On the basis of the above embodiments, the following embodiments of the present disclosure introduce a feasible method of making the turn-on duration of the third switch and the turn-on duration of the fourth switch in the second bridge circuit of the synchronous rectification circuit controlled by the control circuit increase progressively every switching cycle.

Alternatively, in the embodiments of the present disclosure, the control circuit can make the turn-on duration of the third switch and the turn-on duration of the fourth switch increase progressively every switching cycle by controlling the pulse width of the driving signal of the third switch and the pulse width of the driving signal of the fourth switch to increase progressively every switching cycle.

It should be noted that due to the difference between the third initial turn-on duration of the third switch and the fourth initial turn-on duration of the fourth switch, the third initial pulse width of the driving signal of the third switch corresponding to the first switching cycle (hereinafter referred to as the third initial pulse width of the driving signal of the third switch) is different from the fourth initial pulse width of the driving signal of the fourth switch corresponding to the first switching cycle (hereinafter referred to as the fourth initial pulse width of the driving signal of the fourth switch).

In one possible implementation, in condition of the third switch being the upper switch in the second bridge circuit (i.e. an ungrounded switch in the second bridge circuit) and the fourth switch being the lower switch in the second bridge circuit (i.e. the grounded switch in the second bridge circuit), the third initial turn-on duration of the third switch may be less than the fourth initial turn-on duration of the fourth switch, and the first initial pulse width of the driving signal of the third switch is less than the fourth initial pulse width of the driving signal of the fourth switch.

For example, during the start-up process of the synchronous rectification circuit, the control circuit can control the pulse width of the driving signal of the third switch in the second bridge circuit of the synchronous rectification circuit to increase progressively from the third initial pulse width to the second target pulse width, and control the pulse width of the driving signal of the fourth switch in the second bridge circuit to increase progressively from the fourth initial pulse width to the second target pulse width. The third initial pulse width can be zero, the fourth initial pulse width is greater than zero and less than the second target pulse width, and the second target pulse width can be less than or equal to the first target pulse width, which is conducive to preventing the problem of reverse conduction between the third switch and the fourth switch. It should be understood that the turn-on duration corresponding to the second target pulse width is the second preset duration.

In another possible implementation, in condition of the third switch being the lower switch in the second bridge circuit and the fourth switch being the upper switch in the second bridge circuit, the third initial turn-on duration of the third switch can be greater than the fourth initial turn-on duration of the fourth switch, and the third initial pulse width of the driving signal of the third switch is greater than the fourth initial pulse width of the driving signal of the fourth switch.

For example, during the start-up process of the synchronous rectification circuit, the control circuit can control the pulse width of the driving signal of the third switch in the second bridge circuit of the synchronous rectification circuit to increase progressively from the third initial pulse width to the second target pulse width, and control the pulse width of the driving signal of the fourth switch in the second bridge circuit to increase progressively from the fourth initial pulse width to the second target pulse width, the fourth initial pulse width can be zero, and the third initial pulse width is greater than zero and less than the second target pulse width.

It should be noted that due to the difference between the third initial pulse width of the driving signal of the third switch and the fourth initial pulse width of the driving signal of the fourth switch, the duration of the pulse width of the driving signal of the third switch increasing to the second target pulse width is different from the duration of the pulse width of the driving signal of the fourth switch increasing to the second target pulse width.

In some embodiments, the control circuit can be configured to control the pulse width of the driving signal of the third switch and the pulse width of the driving signal of the fourth switch to increase by the second preset pulse width every m switching cycles, and m is a positive integer and the second preset pulse width can be a fixed value, or the second preset pulse width can increase with increase of the switching cycle during the start-up process of the synchronous rectification circuit. For example, the second preset pulse width can be increased by the fourth preset pulse width every second preset switching cycle, and the fourth preset pulse width can be a fixed value.

It should be understood that in the embodiments, the control circuit can control the pulse width of the driving signal of the third switch to increase by the second preset pulse width 1 every m1 switching cycles, and can control the pulse width of the driving signal of the fourth switch to increase by the second preset pulse width 2 every m2 switching cycles, m1 and m2 are positive integers, m1 and m2 can be the same or different, and the second preset pulse width 1 and the second preset pulse width 2 can be the same or different.

In some embodiments, the control circuit can be configured to randomly increase the pulse width of the driving signal of the third switch and the pulse width of the driving signal of the fourth switch every at least one switching cycle.

In some embodiments, the control circuit can be configured to control the pulse width of the driving signal of the third switch and the pulse width of the driving signal of the fourth switch to increase progressively along a direction every switching cycle.

It should be understood that the control circuit can control the pulse width of the driving signal of the third switch and the pulse width of the driving signal of the fourth switch to increase progressively along a direction by the second preset pulse width every m switching cycles, or randomly increase by any pulse width every at least one switching cycle.

The schematic view of pulse width increasing of the driving signal of the third switch and the driving signal of the fourth switch can be referred to FIG. 10 or FIG. 11

(It should be noted that the pulse width of the driving signal of the third switch and the pulse width of the driving signal of the fourth switch increase progressively to the second target pulse width, and the second target pulse width may be less than or equal to the first target pulse width D1).

In some embodiments, the control circuit can be configured to control the pulse width of the driving signal of the third switch and the driving signal of the fourth switch to increase progressively along two opposite directions every switching cycle.

It should be noted that in the embodiments, the initial pulse width of the driving signal of the third switch and the initial pulse width of the driving signal of the fourth switch can be located in middle of the corresponding half switching cycle, to increase progressively along two opposite directions.

It should be understood that the control circuit can control the pulse width of the driving signal of the third switch and the pulse width of the driving signal of the fourth switch to increase progressively along two opposite directions every m switching cycles by the second preset pulse width, or randomly increase by any pulse width every at least one switching cycle.

The schematic view of pulse width increasing of the driving signal of the third switch and the driving signal of the fourth switch can be referred to FIG. 12 (it should be noted that the pulse width of the driving signal of the third switch and the pulse width of the driving signal of the fourth switch increase progressively to the second target pulse width, and the second target pulse width can be less than or equal to the first target pulse width D1).

The control circuit can also control the pulse width of the driving signal of the third switch and the pulse width of the driving signal of the fourth switch to increase progressively through other means, and there are no limitations herein in the embodiments of the present disclosure.

On the basis of the above embodiments, the following embodiments of the present disclosure introduce the relevant content of the control circuit in the DCDC circuit.

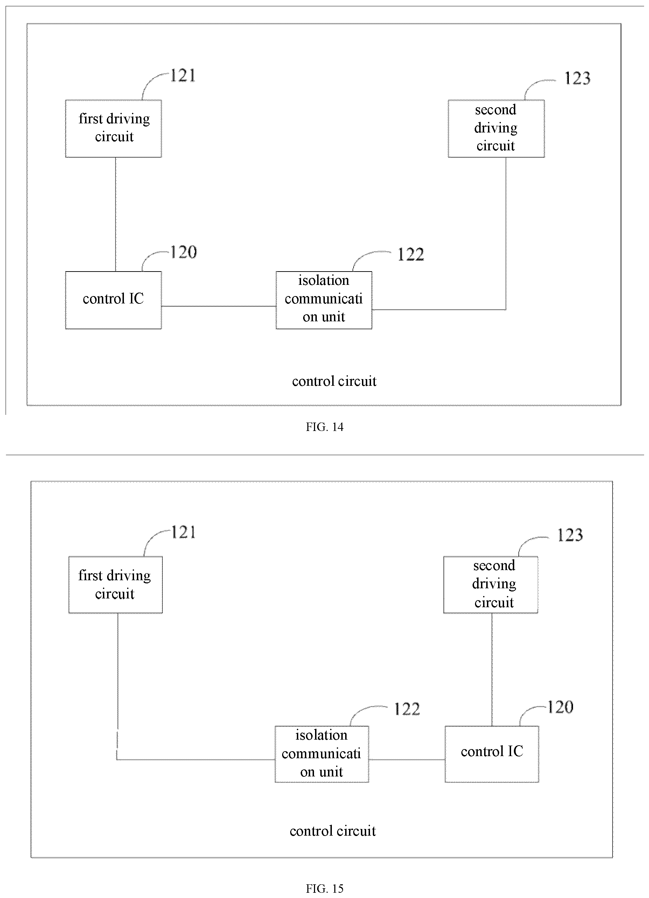

In some embodiments, FIG. 14 is a first structural schematic view of a control circuit provided by some embodiments of the present disclosure. As shown in FIG. 14, the control circuit of the embodiments of the present disclosure may include: a control integrated circuit (IC) 120, a first driving circuit 121, an isolation communication unit 122, and a second driving circuit 123. The first driving circuit may be the driving circuit corresponding to the first switch and the second switch in the above-mentioned transformer circuit, and the second driving circuit may be the driving circuit corresponding to the third switch and the fourth switch in the above-mentioned synchronous rectification circuit. For example, the control IC involved in the embodiments of the present disclosure may include, but is not limited to, a microcontroller unit (MCU) or a digital signal processor (DSP).

It should be noted that the first driving circuit is typically located at a side of a primary coil of the transformer in the transformer circuit, also known as a primary driving circuit. The second driving circuit is typically located at a side of a secondary coil of the transformer in the transformer circuit, also known as a secondary driving circuit.

The control IC is configured to send a first control signal to the first driving circuit, to make the first driving circuit send a driving signal to a gate corresponding to the switch in the transformer circuit according to the first control signal, and is configured to sends a second control signal to the second driving circuit, to make the second driving circuit send a driving signal to a gate corresponding to the switch in the synchronous rectification circuit according to the second control signal.

Alternatively, the control IC involved in the embodiments of the present disclosure can be located at the side of the primary coil of the transformer in the transformer circuit, or can be located at the side of the secondary coil of the transformer in the transformer circuit.

In one possible implementation, in condition of the control IC being located at the side of the primary coil of the transformer in the transformer circuit, the isolation communication unit is located between the control IC and the second drive circuit, as shown in FIG. 14.

In another possible implementation, in condition of the control IC being located at the side of the secondary coil of the transformer in the transformer circuit, the isolation communication unit is located between the control IC and the first driving circuit, as shown in FIG. 15 (FIG. 15 is a second structural schematic view of a control circuit provided by some embodiments of the present disclosure).

For example, the isolation communication unit involved in the embodiments of the present disclosure may include, but is not limited to, an isolation transformer, an isolation chip, or an isolation optocoupler.

It should be understood that in condition of the voltage of the control signal output by the control IC being large enough, the first driving circuit and/or the second driving circuit mentioned above may not be necessary; alternatively, in condition of the isolation communication unit having a driving function, the control IC can be connected to the gate of the switch that needs to be controlled through the isolation communication unit without going through the corresponding driving circuit.

In order to facilitate the understanding, the following embodiments of the present disclosure take the control IC located at the side of the primary coil of the transformer in the transformer circuit as an example, and introduce the DCDC circuit in the embodiments of the present disclosure by combining feasible implementations of the transformer circuit and the synchronous rectification circuit.

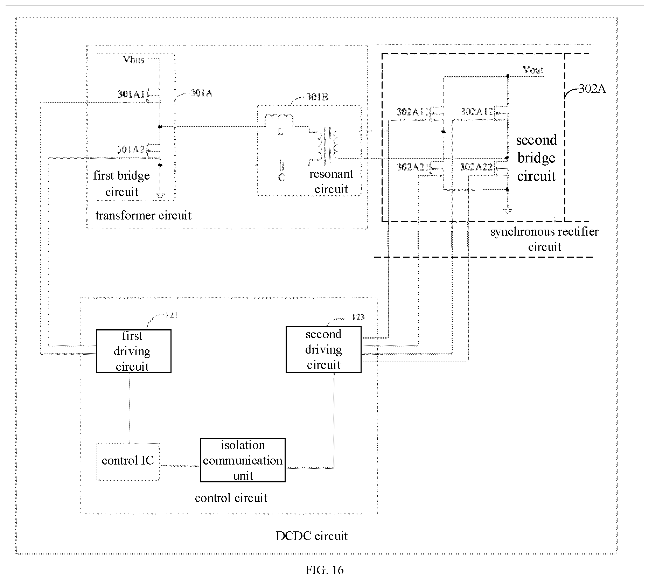

FIG. 16 is a structural schematic view of a DCDC circuit provided by some other embodiments of the present disclosure. As shown in FIG. 16, the first bridge circuit 301A in the transformer circuit may be the half-bridge circuit, and the first bridge circuit 301A may include a first switch 301A1 and a second switch 301A2. A resonant circuit 301B in the transformer circuit may include a resonant capacitor C and a resonant inductor L, and the resonant inductor L can be configured to represent the leakage inductance of the transformer.

For example, a drain of the first switch 301A1 is connected to a voltage input terminal Vbus of the DCDC circuit, a source of the first switch 301A1 and a drain of the second switch 301A2 are connected to a resonant inductor L, a source of the second switch 301A2 and a terminal of the resonant capacitor C are grounded, and a gate of the first switch 301A1 and a gate of the second switch 301A2 are connected to a first driving circuit 121. It should be understood that positions of the resonant capacitor C and resonant inductor L in the resonant circuit 301B in FIG. 16 can be interchanged.

It should be noted that the resonant inductor L can also represent a leakage inductance and an independent inductor of the transformer, and the inductance of the independent inductor can be relatively small. It should be noted that for the transformer circuit that still uses an independent inductor but have a small inductance, the method provided by the embodiments of the present disclosure can effectively suppress the current surge in the resonant circuit, which is conducive to ensuring the safe start-up of the transformer circuit.

As shown in FIG. 16, the second bridge circuit 302A in the synchronous rectification circuit can be the full-bridge circuit, and a third switch in a second bridge circuit 302A can include a switch 302A11 and a switch 302A12 located at a third bridge arm of the second bridge circuit. A fourth switch in the second bridge circuit 302A can include the switch 302A21 and the switch 302A22 located at a fourth bridge arm of the second bridge circuit.

For example, a drain of the switch 302A11 and the a of the switch 302A12 are both connected to the voltage output terminal Vout of the DCDC circuit, and a source of the switch 302A21 and a source of the switch 302A22 can be grounded. One terminal of the secondary coil of the transformer (i.e. the first voltage output terminal of the transformer circuit) can be connected to a source of the switch 302A11 and a drain of the switch 302A21, and the other terminal of the secondary coil of the transformer (i.e. the second voltage output terminal of the transformer circuit) can be connected to a source of the switch 302A12 and a drain of the switch 302A22. A gate of the switch 302A11, a gate of the switch 302A12, a gate of the switch 302A21, and a gate of the switch 302A22 are connected to the second driving circuit 123.

In the embodiments of the present disclosure, during the start-up process of the transformer circuit, the control IC can control turn-on duration of the first switch 301A1 in the first bridge circuit 301A to increase progressively every switching cycle through the first driving circuit 121, and control turn-on duration of the second switch 301A2 to increase progressively every switching cycle through the first driving circuit 121, to make electric energy from the voltage input terminal of the DCDC circuit progressively enter the resonant circuit in the transformer circuit, so that the current entering the resonant circuit during the start-up process of the transformer circuit is controlled, thereby effectively suppressing the current surge in the resonant circuit, and ensuring the safe start-up of the transformer circuit.

Furthermore, after start-up of the transformer circuit, the control IC can control the turn-on duration of the third switch (including the switch 302A11 and the switch 302A12) in the second bridge circuit 302A through the second driving circuit 123 to increase progressively every switching cycle, and control the turn-on duration of the fourth switch (including the switch 302A21 and the switch 302A22) to increase progressively every switching cycle, to make the electric energy from the voltage output terminal of the transformer circuit progressively enter the synchronous rectification circuit, so that the current entering the synchronous rectification circuit can be controlled during the start-up process of the synchronous rectification circuit, thereby effectively suppressing the current surge in the synchronous rectification circuit, and ensuring the safe start-up of the synchronous rectification circuit.

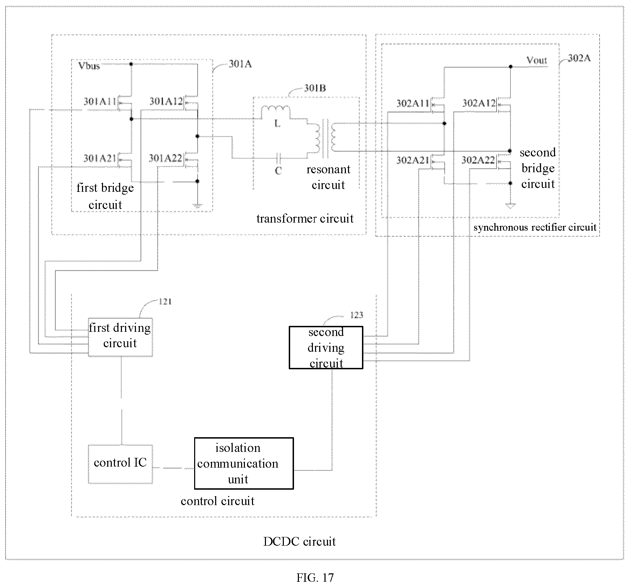

FIG. 17 is a structural schematic view of a DCDC circuit provided by some other embodiments of the present disclosure. As shown in FIG. 17, the first bridge circuit 301A in the transformer circuit can be the full-bridge circuit, and the first switch in the first bridge circuit 301A can include the switch 301A11 and the switch 301A12 located at the first bridge arm of the first bridge circuit 301A. The second switch in the first bridge circuit 301A can include the switch 301A21 and the switch 301A22 located at the second bridge arm of the first bridge circuit 301A. The resonant circuit 301B in the transformer circuit may include a resonant capacitor C and a resonant inductor L, and the resonant inductor L can be configured to represent the leakage inductance of the transformer.

For example, the drain of the switch 301A11 and the drain of the switch 301A12 are both connected to the voltage input terminal Vbus of the DCDC circuit. The source of the switch 301A11 and the drain of the switch 301A21 can be connected to the resonant inductor L. The source of the switch 301A12 and the drain of the switch 301A22 can be connected to one terminal of the resonant capacitor C. The source of the switch 301A21 and the source of the switch 301A22 can be grounded, and the gate of the switch 301A11, the gate of the switch 301A12, the gate of the switch 301A21, and 3the gate of the switch 01A22 can be connected to the first driving circuit 121.

As shown in FIG. 17, the second bridge circuit 302A in the synchronous rectification circuit can be the full-bridge circuit, and the third switch in the second bridge circuit 302A can include the switch 302A11 and the switch 302A12 located at the third bridge arm of the second bridge circuit. The fourth switch in the second bridge circuit 302A can include the switch 302A21 and the switch 302A22 located at the fourth bridge arm of the second bridge circuit.

In the embodiments of the present disclosure, during the start-up process of the transformer circuit, the control IC can control the turn-on duration of the first switch (including the switch 301A11 and the switch 301A12) in the first bridge circuit 301A to increase progressively every switching cycle and control the turn-on duration of the second switch (including the switch 301A21 and the switch 301A22) to increase progressively every switching cycle through the first driving circuit 121, to make the electric energy from the voltage input terminal of the DCDC circuit progressively enter the resonant circuit of the transformer circuit, so that the current entering the resonant circuit can be controlled during the start-up process of the transformer circuit, thereby effectively suppressing the current surge in the resonant circuit, and ensuring the safe start-up of the transformer circuit.

Furthermore, after start-up of the transformer circuit, the control IC can control the turn-on duration of the third switch (including the switch 302A11 and the switch 302A12) in the second bridge circuit 302A to increase progressively every switching cycle and control the turn-on duration of the fourth switch (including the switch 302A21 and the switch 302A22) to increase progressively every switching cycle through the second driving circuit 123, to make electric energy from the voltage output terminal of the transformer circuit progressively enter the synchronous rectification circuit, so that the current entering the synchronous rectification circuit can be controlled during the start-up process of the synchronous rectification circuit, thereby effectively suppressing the current surge in the synchronous rectification circuit and ensuring the safe start-up of the synchronous rectification circuit.

In addition, the control IC controls the initial turn-on duration of the lower switch in the first bridge circuit and the second bridge circuit to be greater than that of the upper switch through the corresponding driving circuit, which can ensure that the bootstrap capacitor corresponding to the upper switch can store sufficient electrical energy during a conduction process of the lower switch, to make the BOOT voltage meet the driving voltage of the upper switch, so that the upper switch can reliably conduct during the start-up process of the DCDC circuit, thereby preventing the problem of repeated interruption of the current caused by low BOOT voltage.

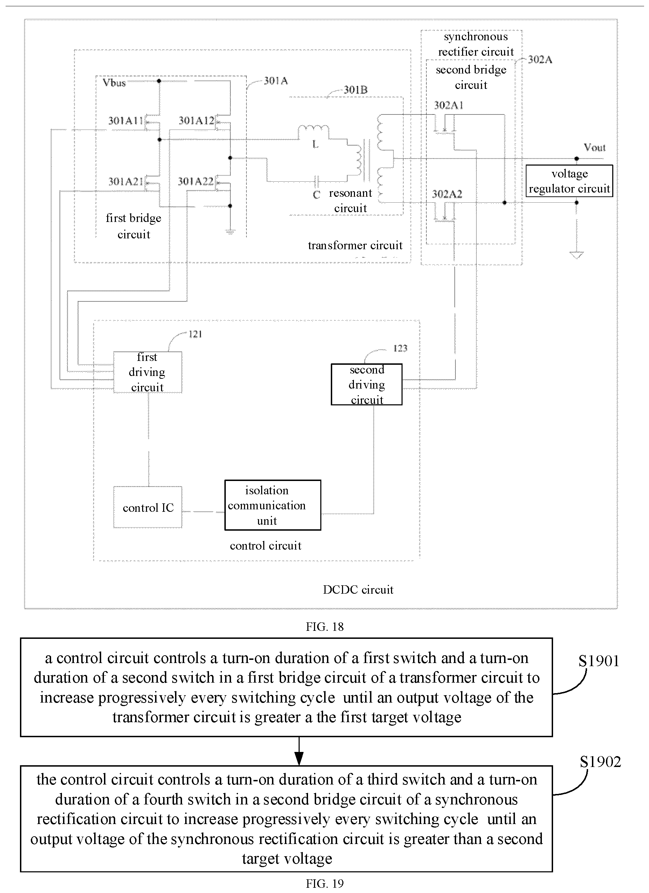

FIG. 18 is a structural schematic view of a DCDC circuit provided by some other embodiments of the present disclosure. As shown in FIG. 18, the first bridge circuit 301A in the transformer circuit can be the full-bridge circuit, and the first switch in the first bridge circuit 301A can include the switch 301A11 and the switch 301A12 located at the first bridge arm of the first bridge circuit 301A. The second switch in the first bridge circuit 301A can include the switch 301A21 and the switch 301A22 located at the second bridge arm of the first bridge circuit301A.

As shown in FIG. 18, the second bridge circuit 302A in the synchronous rectification circuit can be a half-bridge circuit, and the second bridge circuit 302A can include a third switch 302A1 and a fourth switch 302A2.

For example, a drain of the third switch 302A1 can be connected to a first terminal of the secondary coil of the transformer (i.e., a first voltage output of the transformer circuit), a source of the third switch 302A1 and a source of the fourth switch 302A2 can be grounded, and a drain of the fourth switch 302A2 can be connected to a second terminal of the secondary coil of the transformer (i.e. the second voltage output terminal of the transformer circuit). A gate of the third switch 302A1 and a gate of the fourth switch 302A2 are connected to the second driving circuit 123. A third terminal of the secondary coil of the transformer can be connected to a first terminal of the voltage regulator circuit, and a second terminal of the voltage regulator circuit is grounded. The first terminal of the voltage regulator circuit can be the voltage output terminal Vout of the DCDC circuit, and the voltage regulator circuit is configured for voltage regulation and filtering. It should be noted that in the embodiments of the present disclosure, the third switch 302A1 can be the upper switch in the second bridge circuit 302A, and the fourth switch 302A2 can be the lower switch in the second bridge circuit 302A.

In the embodiments of the present disclosure, during the start-up process of the transformer circuit, the control IC can control the turn-on duration of the first switch (including the switch 301A11 and the switch 301A12) in the first bridge circuit 301A to increase progressively every switching cycle, and control the turn-on duration of the second switch (including the switch 301A21 and the switch 301A22) to increase progressively every switching cycle through the first driving circuit 121, to make electric energy from the voltage input terminal of the DCDC circuit progressively enter the resonant circuit of the transformer circuit, so that the current entering the resonant circuit during the start-up process of the transformer circuit can be controlled, thereby effectively suppressing the current surge in the resonant circuit and ensuring the safe start-up of the transformer circuit.

Furthermore, after start-up of the transformer circuit, the control IC can control the turn-on duration of the third switch 302A1 in the second bridge circuit 302A to increase progressively every switching cycle, and control the turn-on duration of the fourth switch 302A2 to increase progressively every switching cycle through the second driving circuit 123, to make the electric energy from the voltage output terminal of the transformer circuit progressively enter the synchronous rectification circuit, so that the current entering the synchronous rectification circuit during the start-up process of the synchronous rectification circuit can be controlled, thereby effectively suppressing the current surge in the synchronous rectification circuit and ensuring the safe start-up of the synchronous rectification circuit.

It should be noted that the first bridge circuit 301A in FIG. 18 can also be replaced with the half-bridge circuit. Specific circuit connection and a control method can refer to the relevant content shown in FIG. 16, which will not be repeated here.

In some embodiments, FIG. 19 is a flowchart of a circuit start-up method provided by some embodiments of the present disclosure. The circuit start-up method provided by the embodiments of the present disclosure can be applied to the above-mentioned DCDC circuit. Alternatively, the DCDC circuit provided by the embodiments of the present disclosure may include, but is not limited to, a transformer circuit, a synchronous rectification circuit, and a control circuit. As shown in FIG. 19, the circuit start-up method of the embodiments of the present disclosure may include the following operations.

At block S1901, a control circuit controls a turn-on duration of a first switch and a turn-on duration of a second switch in a first bridge circuit of a transformer circuit to increase progressively every switching cycle until an output voltage of the transformer circuit is greater than the first target voltage.

A first initial turn-on duration of the first switch corresponding to a first switching cycle is different from a second initial turn-on duration of the second switch corresponding to the first switching cycle.

At block S1902, the control circuit controls a turn-on duration of a third switch and a turn-on duration of a fourth switch in a second bridge circuit of a synchronous rectification circuit to increase progressively every switching cycle until an output voltage of the synchronous rectification circuit is greater than a second target voltage.

A third initial turn-on duration of the third switch during the corresponding first switching cycle is different from a fourth initial turn-on duration of the fourth switch during the corresponding first switching cycle.

In some embodiments, operations that the control circuit controls the turn-on duration of the first switch and the turn-on duration of the second switch in the first bridge circuit of the transformer circuit to increase progressively every switching cycle, include: the control circuit controls a pulse width of a driving signal of the first switch and a pulse width of a driving signal of the second switch to increase progressively every switching cycle.

A first initial pulse width of the driving signal of the first switch corresponding to the first switching cycle is different from a second initial pulse width of the driving signal of the second switch corresponding to the first switching cycle.

In some embodiments, operations that the control circuit controls the pulse width of the driving signal of the first switch and the pulse width of the driving signal of the second switch to increase progressively every switching cycle, include: the control circuit controls the pulse width of the driving signal of the first switch and the pulse width of the driving signal of second switch to increase by a first preset pulse width every n switching cycles, and n is a positive integer.

In some embodiments, operations that the control circuit controls the pulse width of the driving signal of the first switch and the pulse width of the driving signal of the second switch to increase progressively every switching cycle, include: the control circuit controls the pulse width of the driving signal of the first switch and the pulse width of the driving signal of the second switch to increase progressively along a direction every switching cycle; or, the control circuit controls the pulse width of the driving signal of the first switch and the pulse width of the driving signal of the second switch to increase progressively along two opposite directions every switching cycle.

In some embodiments, operations that the control circuit controls the turn-on duration of the third switch and the turn-on duration of the fourth switch in the second bridge circuit of the synchronous rectification circuit to increase progressively every switching cycle, include: the control circuit controls a pulse width of a driving signal of the third switch and a pulse width of a driving signal of the fourth switch to increase progressively every switching cycle.

A third initial pulse width of the driving signal of the third switch corresponding to the first switching cycle is different from a fourth initial pulse width of the driving signal of the fourth switch corresponding to the first switching cycle.

In some embodiments, operations that the control circuit controls the pulse width of the driving signal of the third switch and the pulse width of the driving signal of the fourth switch to increase progressively every switching cycle, include: the control circuit controls the pulse width of the driving signal of the third switch and the pulse width of the driving signal of the fourth switch to increase by a second preset pulse width every m switching cycles, and m is a positive integer.

In some embodiments, operations that the control circuit controls the pulse width of the driving signal of the third switch and the pulse width of the driving signal of the fourth switch to increase progressively every switching cycle, includes: the control circuit controls the pulse width of the driving signal of the third switch and the pulse width of the driving signal of the fourth switch to increase progressively along a direction every switching cycle; or, the control circuit controls the pulse width of the driving signal of the third switch and the pulse width of the driving signal of the fourth switch to increase progressively along two opposite directions every switching cycle.

The circuit start-up method provided by the embodiments of the present disclosure can be applied to the DCDC circuit provided by the above embodiments of the present disclosure, and the implementation principle and the technical effect are similar, which will not be repeated here.

In some embodiments, an electronic device is provided, which may include the DCDC circuit provided in the above embodiments of the present disclosure, and the DCDC circuit includes a transformer circuit, a synchronous rectification circuit, and a control circuit.

The control circuit is configured to control a turn-on duration of a first switch and a turn-on duration of a second switch in a first bridge circuit of a transformer circuit to increase progressively every switching cycle until an output voltage of the transformer circuit is greater than a first target voltage. A first initial turn-on duration of the first switch corresponding to a first switching cycle is different from a second initial turn-on duration of the second switch corresponding to the first switching cycle.

The control circuit is configured to control a turn-on duration of a third switch and a turn-on duration of a fourth switch in a second bridge circuit of a synchronous rectification circuit to increase progressively every switching cycle until an output voltage of the synchronous rectification circuit is greater than a second target voltage. A third initial turn-on duration of the third switch is different from a fourth initial turn-on duration of the fourth switch corresponding to the first switching cycle.

In some embodiments, the first bridge circuit is a half-bridge circuit, and the first switch is connected to a voltage input terminal of the DCDC circuit.

The first initial turn-on duration of the first switch is less than the second initial turn-on duration of the second switch.

In some embodiments, the first bridge circuit is a full-bridge circuit, and the first switch includes two switches located at the first bridge arm of the first bridge circuit. The second switch includes two switches located at the second bridge arm of the first bridge circuit. The first switch is connected to the voltage input terminal of the DCDC circuit.

The first initial turn-on duration of the first switch is less than the second initial turn-on duration of the second switch.

In some embodiments, the control circuit is configured to control a pulse width of a driving signal of the first switch and a pulse width of a driving signal of the second switch to increase progressively every switching cycle.

A first initial pulse width of the driving signal of the first switch corresponding to the first switching cycle is different from a second initial pulse width of the driving signal of the second switch corresponding to the first switching cycle.

In some embodiments, the control circuit is configured to control the pulse width of the driving signal of the first switch and the pulse width of the driving signal of the second switch to increase by a first preset pulse width every n switching cycles, and n is a positive integer.

In some embodiments, the first preset pulse width is a fixed value, or the first preset pulse width increases progressively along with the number of switching cycle increasing.

In some embodiments, the control circuit is configured to control the pulse width of the driving signal of the first switch and the pulse width of the driving signal of the second switch to increase progressively along a direction every switching cycle; or, control the pulse width of the driving signal of the first switch and the pulse width of the driving signal of the second switch to increase progressively along two opposite directions every switching cycle.

In some embodiments, the second bridge circuit is a full-bridge circuit, the third switch includes two switches located at the third bridge arm of the second bridge circuit, the fourth switch includes two switches located at the fourth bridge arm of the second bridge circuit, and the third switch is connected to the voltage output terminal of the DCDC circuit.

The third initial turn-on duration of the third switch is less than the fourth initial turn-on duration of the fourth switch.

In some embodiments, the control circuit is configured to control the pulse width of the driving signal of the third switch and the pulse width of the driving signal of the fourth switch to increase progressively every switching cycle.

The third initial pulse width of the driving signal of the third switch corresponding to the first switching cycle is different from the fourth initial pulse width of the driving signal of the fourth switch corresponding to the first switching cycle.

In some embodiments, the control circuit is configured to control the pulse width of the driving signal of the third switch and the pulse width of the driving signal of the fourth switch to increase by a second preset pulse width every m switching cycles, and m is a positive integer.

In some embodiments, the second preset pulse width is a fixed value, or the second preset pulse width increases progressively along with the number of switching cycle increasing.

In some embodiments, the control circuit is configured to control the pulse width of the driving signal of the third switch and the pulse width of the driving signal of the fourth switch to increase progressively along a direction every switching cycle; or, control the pulse width of the driving signal of the third switch and the pulse width of the driving signal of the fourth switch to increase progressively along two opposite directions every switching cycle.

The electronic device provided by some embodiments of the present disclosure may include the DCDC circuit provided in the above embodiments of the present disclosure, and the implementation principle and the technical effect are similar, which will not be repeated here.

For example, the electronic device involved in the embodiments of the present disclosure may include, but is not limited to, a power adapter, a power bank, a mobile phone, a laptop, a tablet, a smartwatch, a smart bracelet, a sweeping machine, a wireless headphone, an electric toothbrush, or a desktop computer.

In some embodiments, a computer-readable storage medium is provided, on which a computer program is stored. When the computer program is executed by a processor, the technical solution in the above circuit start-up method embodiments of the present disclosure is performed. The implementation principle and the technical effect are similar, and will not be repeated here.

In some embodiments, a computer program product is provided, including a computer program that, when executed by a processor, the technical solution described in the circuit start-up method embodiments of the present disclosure is performed. The implementation principle and the technical effect are similar, and will not be repeated here.

Those skilled in the art can understand that implementing all or part of the processes in the above embodiments can be accomplished by instructing a relevant hardware through a computer program. The computer program can be stored in a non-transitory computer-readable storage medium, and when executed, it may include the processes of the embodiments of the above methods. Any reference to memory or other storage medium used in the embodiments provided by the present disclosure may include at least one of transitory and non-transitory storage medium. The non-transitory storage medium can include Read Only Memory (ROM), a magnetic tape, a floppy disk, a flash memory, an optical memory, a high-density embedded non-transitory memory, a Resistive Random Access Memory (ReRAM), a Magnetoresistive Random Access Memory (MRAM), a Ferroelectric Random Access Memory (FRAM), a Phase Change Memory (PCM), graphene memory, and the like. The transitory memory can include a Random Access Memory (RAM) or an external cache memory. As an illustration and not a limitation, the RAM can take various forms, such as a Static Random Access Memory (SRAM) or a Dynamic Random Access Memory (DRAM). The processor involved in the various embodiments provided by the present disclosure may be a general-purpose processor, a central processing unit, a graphics processor, a digital signal processor, a programmable logic unit, a quantum computing based data processing logic unit, and the like, but is not limited to these.

The technical features of the above embodiments can be combined arbitrarily. In order to make the description concise, all possible combinations of respective technical features in the above embodiments are not described. However, as long as there is no contradiction between the combination of these technical features, it should be considered as the scope of the description.

The above-mentioned examples only express several embodiments of the present disclosure, and their descriptions are relatively specific and detailed, but they should not be construed as limiting the scope of present disclosure. It should be noted that, for those of ordinary skill in the art, several modifications and improvements may be made without departing from the concept of the present disclosure, which are all within the scope of protection of the present disclosure. Therefore, the scope of protection of the present disclosure patent shall be subject to the appended claims.

## Claims

1. A direct current to direct current conversion (DCDC) circuit, comprising:
a transformer circuit, a synchronous rectification circuit, and a control circuit;
wherein the control circuit is configured to:
control a turn-on duration of a first switch and a turn-on duration of a second switch in a first bridge circuit of the transformer circuit to increase progressively every switching cycle until an output voltage of the transformer circuit is greater than a first target voltage; wherein a first initial turn-on duration of the first switch corresponding to a first switching cycle is different from a second initial turn-on duration of the second switch corresponding to the first switching cycle; and
control a turn-on duration of a third switch and a turn-on duration of a fourth switch in a second bridge circuit of the synchronous rectification circuit to increase progressively every switching cycle until an output voltage of the synchronous rectification circuit is greater than a second target voltage, wherein a third initial turn-on duration of the third switch corresponding to the first switching cycle is different from a fourth initial turn-on duration of the fourth switch corresponding to the first switching cycle.

2. The DCDC circuit as claimed in claim 1, wherein the first bridge circuit is a half-bridge circuit, and the first switch is connected to a voltage input terminal of the DCDC circuit; and
the first initial turn-on duration of the first switch is less than the second initial turn-on duration of the second switch.

3. The DCDC circuit as claimed in claim 1, wherein the first bridge circuit is a full-bridge circuit, and the first switch comprises two switches located at a first bridge arm of the first bridge circuit; the second switch comprises two switches located at a second bridge arm of the first bridge circuit; and the first switch is connected to a voltage input terminal of the DCDC circuit; and
the first initial turn-on duration of the first switch is less than the second initial turn-on duration of the second switch.

4. The DCDC circuit as claimed in any one of claims 1 to 3, wherein the control circuit is configured to:
control a pulse width of a driving signal of the first switch and a pulse width of a driving signal of the second switch to increase progressively every switching cycle; and
wherein a first initial pulse width of the driving signal of the first switch corresponding to the first switching cycle is different from a second initial pulse width of the driving signal of the second switch corresponding to the first switching cycle.

5. The DCDC circuit as claimed in claim 4, wherein the control circuit is configured to:
control the pulse width of the driving signal of the first switch and the pulse width of the driving signal of the second switch to increase by a first preset pulse width every n switching cycles, wherein n is a positive integer.

6. The DCDC circuit as claimed in claim 5, wherein the first preset pulse width is a fixed value, or the first preset pulse width increases progressively along with the number of switching cycle increasing.

7. The DCDC circuit as claimed in claim 4, wherein the control circuit is configured to:
control the pulse width of the driving signal of the first switch and the pulse width of the driving signal of the second switch to increase progressively along a direction every switching cycle; or
control the pulse width of the driving signal of the first switch and the pulse width of the driving signal of the second switch to increase progressively along two opposite directions every switching cycle.

8. The DCDC circuit as claimed in claim 1, wherein the second bridge circuit is a full-bridge circuit, and the third switch comprises two switches located at a third bridge arm of the second bridge circuit; the fourth switch comprises two switches located at a fourth bridge arm of the second bridge circuit; and the third switch is connected to a voltage output terminal of the DCDC circuit; and
a third initial turn-on duration of the third switch is less than a fourth initial turn-on duration of the fourth switch.

9. The DCDC circuit as claimed in claim 1 or 8, wherein the control circuit is configured to:
control a pulse width of a driving signal of the third switch and a pulse width of a driving signal of the fourth switch to increase progressively every switching cycle; and
wherein a third initial pulse width of the driving signal of the third switch corresponding to the first switching cycle is different from a fourth initial pulse width of the driving signal of the fourth switch corresponding to the first switching cycle.

10. The DCDC circuit as claimed in claim 9, wherein the control circuit is configured to:
control the pulse width of the driving signal of the third switch and the pulse width of the driving signal of the fourth switch to increase by a second preset pulse width every m switching cycles, wherein m is a positive integer.

11. The DCDC circuit as claimed in claim 10, wherein the second preset pulse width is a fixed value, or the second preset pulse width increases progressively along with the number of switching cycle increasing.

12. The DCDC circuit as claimed in claim 9, wherein the control circuit is configured to:
control the pulse width of the driving signal of the third switch and the pulse width of the driving signal of the fourth switch to increase progressively along a direction every switching cycle; or
control the pulse width of the driving signal of the third switch and the pulse width of the driving signal of the fourth switch to increase progressively along two opposite directions every switching cycle.

13. A circuit start-up method, applied to a direct current to direct current conversion (DCDC) circuit, the DCDC circuit comprising a transformer circuit, a synchronous rectification circuit, and a control circuit, the method comprising:
controlling, by the control circuit, a turn-on duration of a first switch and a turn-on duration of a second switch in a first bridge circuit of the transformer circuit to increase progressively every switching cycle until an output voltage of the transformer circuit is greater than a first target voltage; wherein a first initial turn-on duration of the first switch corresponding to a first switching cycle is different from a second initial turn-on duration of the second switch corresponding to the first switching cycle; and
controlling, by the control circuit, a turn-on duration of a third switch and a turn-on duration of a fourth switch in a second bridge circuit of the synchronous rectification circuit to increase progressively every switching cycle until an output voltage of the synchronous rectification circuit is greater than a second target voltage, wherein a third initial turn-on duration of the third switch corresponding to the first switching cycle is different from a fourth initial turn-on duration of the fourth switch corresponding to the first switching cycle.

14. The method as claimed in claim 13, wherein the controlling, by the control circuit, a turn-on duration of a first switch and a turn-on duration of a second switch in a first bridge circuit of the transformer circuit to increase progressively every switching cycle, comprises:
controlling, by the control circuit, a pulse width of a driving signal of the first switch and a pulse width of a driving signal of the second switch to increase progressively every switching cycle;
wherein a first initial pulse width of the driving signal of the first switch corresponding to the first switching cycle is different from a second initial pulse width of the driving signal of the second switch corresponding to the first switching cycle.

15. The method as claimed in claim 14, wherein the controlling, by the control circuit, a pulse width of a driving signal of the first switch and a pulse width of a driving signal of the second switch to increase progressively every switching cycle, comprises:
controlling, by the control circuit, the pulse width of the driving signal of the first switch and the pulse width of the driving signal of the second switch to increase by a first preset pulse width every n switching cycles, wherein n is a positive integer.

16. The method as claimed in claim 14, wherein the controlling, by the control circuit, a pulse width of a driving signal of the first switch and a pulse width of a driving signal of the second switch to increase progressively every switching cycle, comprises:
controlling, by the control circuit, the pulse width of the driving signal of the first switch and the pulse width of the driving signal of the second switch to increase progressively along a direction every switching cycle; or
controlling, by the control circuit, the pulse width of the driving signal of the first switch and the pulse width of the driving signal of the second switch to increase progressively along two opposite directions every switching cycle.

17. The method as claimed in claim 13, wherein the controlling, by the control circuit, a turn-on duration of a third switch and a turn-on duration of a fourth switch in a second bridge circuit of the synchronous rectification circuit to increase progressively every switching cycle, comprises:
controlling, by the control circuit, a pulse width of a driving signal of the third switch and a pulse width of a driving signal of the fourth switch to increase progressively every switching cycle;
wherein a third initial pulse width of the driving signal of the third switch corresponding to the first switching cycle is different from a fourth initial pulse width of the driving signal of the fourth switch corresponding to the first switching cycle.

18. The method as claimed in claim 17, wherein the controlling, by the control circuit, a pulse width of a driving signal of the third switch and a pulse width of a driving signal of the fourth switch to increase progressively every switching cycle, comprises:
controlling, by the control circuit, the pulse width of the driving signal of the third switch and the pulse width of the driving signal of the fourth switch to increase by a second preset pulse width every m switching cycles, wherein m is a positive integer.

19. The method as claimed in claim 17, wherein the controlling, by the control circuit, a pulse width of a driving signal of the third switch and a pulse width of a driving signal of the fourth switch to increase progressively every switching cycle, comprises:
controlling, by the control circuit, the pulse width of the driving signal of the third switch and the pulse width of the driving signal of the fourth switch to increase progressively along a direction every switching cycle; or
controlling, by the control circuit, the pulse width of the driving signal of the third switch and the pulse width of the driving signal of the fourth switch to increase progressively along two opposite directions every switching cycle.

20. An electronic device, comprising a direct current to direct current conversion (DCDC) circuit as claimed in any one of claims 1 to 12.

21. A computer-readable storage medium, storing a computer program that when executed, causes a processor to execute the computer program to perform the circuit start-up method as claimed in any one of claims 13 to 19.

22. A computer program product, comprising a computer program that when executed, causes a processor to execute the computer program to perform the circuit start-up method as claimed in any one of claims 13 to 19.
